(19) Europäisches Patentamt
European Patent Office
Office européen des brevets

(11) Veröffentlichungsnummer: **0 082 355**
**B1**

(12) **EUROPÄISCHE PATENTSCHRIFT**

(45) Veröffentlichungstag der Patentschrift: **11.06.86**

(51) Int. Cl.⁴: **B 01 D 13/04**, C 08 J 5/22, C 08 J 7/12

(21) Anmeldenummer: **82111007.9**

(22) Anmeldetag: **29.11.82**

(54) **Semipermeable Membranen aus modifizierten Polystyrolen, Verfahren zu ihrer Herstellung und ihre Verwendung.**

(30) Priorität: **21.12.81 CH 8174/81**

(43) Veröffentlichungstag der Anmeldung: **29.06.83 Patentblatt 83/26**

(45) Bekanntmachung des Hinweises auf die Patenterteilung: **11.06.86 Patentblatt 86/24**

(84) Benannte Vertragsstaaten: **BE CH DE FR GB IT LI NL**

(56) Entgegenhaltungen:
**EP-A-0 013 677**
**DE-A-2 044 509**
**US-A-2 877 191**
**US-A-3 665 055**
**US-A-3 819 742**
**US-A-3 930 990**

(73) Patentinhaber: **ALIGENA AG, Freie Strasse 103, CH-4051 Basel (CH)**

(72) Erfinder: **Linder, Charles, Dr., 20 Derech Yavneh, Rehovot (IL)**
Erfinder: **Aviv, Gershon, Dr., 42 Burla Street, Tel Aviv (IL)**
Erfinder: **Perry, Mordechai, Dr., 32 Sokolov Street, Petach Tikvah (IL)**
Erfinder: **Kotraro, Reuven, 11 Derech Yavneh, Rehovot (IL)**

(74) Vertreter: **Blum, Rudolf Emil Ernst et al, c/o E. Blum & Co Patentanwälte Vorderberg 11, CH-8044 Zürich (CH)**

**EP 0 082 355 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

**Beschreibung**

Die vorliegende Erfindung betrifft semipermeable Membranen aus modifizierten Polystyrolen, die für Diffusionsverfahren, z.B. Umkehrosmose (UO)- oder Ultrafiltrations (UF)-Verfahren geeignet sind.

Die erfindungsgemässen Membranen zeichnen sich insbesondere durch gute Beständigkeit gegen Lösungsmittel, Temperatureinflüsse und mechanischen Druck aus und zeigen gleichzeitig gute Durchfluss- (Flux) und Rückhalteeigenschaften.

Die erfindungsgemässen Membranen enthalten im allgemeinen einen dünnen vernetzten und hydrophilen Film, der chemisch an eine etwas dickere, vernetzte und Poren mit grösserer Öffnung enthaltende Membran gebunden ist. Der dünne hydrophile Film verbessert die Rückhalteeigenschaften der Membran und erhöht die Trennkapazität bei der Trennung einwertiger niedermolekularer Salze von mehrwertigen Salzen oder höhermolekularen Verbindungen.

Die Vernetzung der einzelnen Bestandteile der Membran sowie auch ihre Vernetzung untereinander verleiht der Membran die angegebene Stabilität gegen Lösungsmittel und mechanischen Druck und verhindert ausserdem ein Abtrennen einzelner Schichten innerhalb der Membran.

Kompositmembranen aus einem porösen Träger und beschichtet mit dünnen porösen Filmen sind als UO-Membranen bekannt. In der Regel werden mikroporöse Träger oder Materialien, die zur Ultrafiltration geeignet sind, mit hydrophilen Filmen beschichtet und mit hydrophoben Vernetzungsmitteln vernetzt. Sie sind als UO-Membranen für die Wasserentsalzung (sie zeigen ein gutes Salzrückhaltevermögen) geeignet (EP-Anmeldung 8945, US-PS 3 951 815, US-PS 4 039 440, GB-PS 1 558 807, GB-PA 2 027 614).

Hergestellt werden diese Membranen unter Verwendung von wasserunlöslichen Vernetzungsmitteln in mit Wasser nicht mischbaren Lösungsmitteln, die den dünnen hydrophilen Film nicht angreifen. Der Film kann eine Dicke von 1000 bis 50 000 Å, vorzugsweise von 2000 bis 8000 Å aufweisen. Die Haftung dieses Films auf der porösen Membran erfolgt durch physikalische oder mechanische Kräfte (z.B. teilweise Diffusion des Filmmaterials in die Poren des Trägers).

Unter diesen Umständen ist ein Ablösen der Filmschicht leicht möglich und wie die Praxis gezeigt hat, geschieht dies auch.

Ein weiterer Nachteil dieser bekannten Kompositmembranen besteht darin, dass sie aus Polymeren (Polysulfonen, Polyvinylfluoriden, Polycarbonaten) hergestellt sind, die lösungsmittelempfindlich sind, d.h. in nichtwässerigen Lösungsmitteln aufgelöst werden können.

Die DE-A-25 44 509 beschreibt Membranen aus Vinylcopolymerisaten, die aus drei oder mehr Comonomeren hergestellt werden, wobei eines dieser Comonomeren Styrol oder ein substituiertes Styrol ist. Die Membranen werden vernetzt, z.B. mit Erdalkalichloriden, Ammoniak oder Mono- und Diaminen. Andere Vernetzungsmittel sind z.B. Polyamide, Polyepoxide oder Polyisocyanate. Die so erhaltenen Membranen werden insbesondere zur Wasserentsalzung eingesetzt.

Die Aufgabe der vorliegenden Erfindung ist es, verbesserte semipermeable Membranen mit guter chemischer und mechanischer Stabilität herzustellen, um so die Nachteile der bekannten Membranen zu überwinden.

Es wurde nun gefunden, dass man diese Nachteile durch die Bereitstellung der erfindungsgemässen Membranen (z.B. UO-Kompositmembranen) weitgehend überwinden kann.

Die erfindungsgemässen Membranen enthalten vinylaromatische Polymere, insbesondere Copolymere auf Styrolbasis (im folgenden auch Styrolpolymere oder Polystyrole genannt), die durch eine Folge von verschiedenen chemischen Reaktionsschritten modifiziert sind. Die genannten Copolymeren sind wegen ihrer guten Temperatur- und chemischen Beständigkeit (insbesondere Oxydationsbeständigkeit), wegen ihrer guten filmbildenden Eigenschaften sowie auch wegen der Tatsache, dass man sie leicht chemisch modifizieren kann, für die Herstellung der erfindungsgemässen Membranen gut geeignet.

Im allgemeinen sind diese Membranen mit einem porösen Träger verbunden.

Gegenstand der vorliegenden Erfindung sind nun semipermeable Membranen aus modifizierten Polystyrolen, dadurch gekennzeichnet, dass die Polystyrole wiederkehrende Strukturelemente der Formeln

(1a) 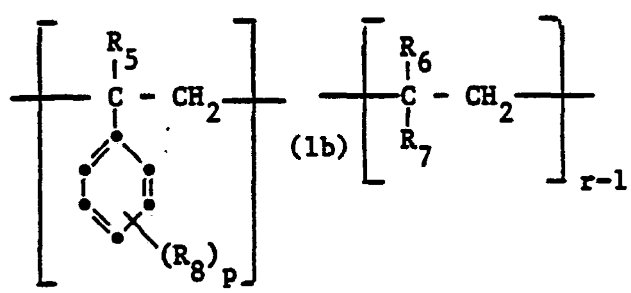 (1b)

aufweisen, worin p und r unabhängig voneinander 1 oder 2 sind, $R_5$ und $R_6$ unabhängig voneinander Wasserstoff, Alkyl mit 1 bis 4 Kohlenstoffatomen oder Halogen sind, $R_7$ Carboxyl, Carbalkoxy mit 1 bis 8

Kohlenstoffatomen im Alkoxyrest, $-CONH_2$, gegebenenfalls N-mono- oder N,N-di-substituiert, Halogen oder Cyano und $R_8$ Wasserstoff oder

(A) $-R_1NH_2$, $-R_2OH$ oder $-R_2SH$ ist, worin $-R_1-$ eine chemische Bindung,

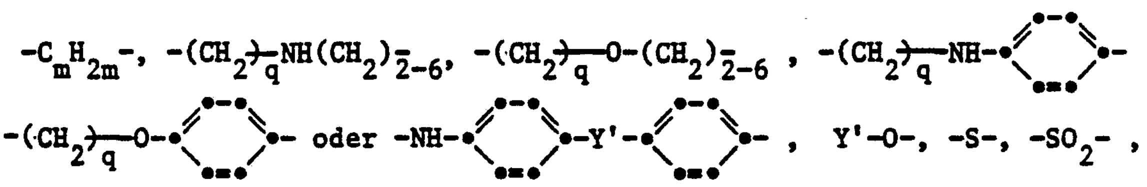

oder

$Y'$-O-, -S-, $-SO_2-$,

$-C(CH_3)_2-$,

$-R_2-$ eine chemische Bindung oder $-C_mH_{2m}-$, m eine ganze Zahl von 1 bis 6 und q Null oder 1 ist und die Struktureinheiten durch Umsetzung mit (a) organischen Verbindungen, die reaktive Mehrfachbindungen oder Epoxid-, Aziridin-, Aldehyd-, Imidat-, Isocyanat-, Isothiocyanat-, Hydroxyl-, Säureanhydrid-, Säurechlorid-, Kohlensäureimidhalogenid- oder N-Methylolgruppen enthalten oder Verbindungen, die als tertiäre Amine oder als Anionen abspaltbare Substituenten, oder mit Verbindungen, die Kombinationen dieser Gruppen (Substituenten) enthalten,

(b) hydrophilen, polyfunktionellen, aliphatischen oder aromatischen Oligomeren oder Polymeren, die Amino-, Hydroxyl- oder Thiolgruppen enthalten, und

(c) nicht-ionischen Verbindungen oder ionischen Verbindungen mit mindestens einer Sulfo-($-SO_3H$)-, Carboxyl-(-COOH)- oder Ammoniumgruppe, wobei die Sulfo- und Carboxylgruppe auch in Salzform vorliegen kann, und mindestens einer, vorzugsweise zwei, mit der Komponente (b) reaktionsfähigen Gruppe(n), chemisch modifiziert sind, oder

(B) $R_8$ $-R_3X$, $-R_4CHO$, -NCO oder -NCS ist, worin $-R_3-$ eine chemische Bindung an einen aliphatischen Rest oder $-C_mH_{2m}-$, $-R_4-$ eine chemische Bindung oder $-C_nH_{2n}-$, X Halogen und n eine ganze Zahl von 1 bis 5 und m die angegebene Bedeutung hat und die Struktureinheiten durch Umsetzung mit (b) und (c) chemisch modifiziert sind, oder

(C) $R_8$ $-R_4CN$ ist, worin $R_4$ die angegebene Bedeutung hat und die Struktureinheiten durch Umsetzung mit Hydroxylamin, (a), (b) und (c) chemisch modifiziert sind und

der Substitutionsgrad von $R_5$ in der Bedeutung Halogen oder der von Wasserstoff verschiedenen Substituenten $R_8$ zwischen 0,3 und 3,5 mäq/g liegt.

Bei den erfindungsgemässen Membranen ist die Gefahr eines Ablösens von Schichten oder ein Auflösen der Membran (Lösungsmittelempfindlichkeit) auf ein Minimum reduziert.

Ausserdem ist die aufgebrachte hydrophile Filmschicht dünner als die bekannten UO-Membranen (vorzugsweise werden monomolekulare Schichten oder Schichten bis zu einer Dicke von 1000 Å aufgebracht; die Dicke der bekannten Schichten liegt etwa zwischen 1000 und 5000 Å). Ferner kann die Vernetzung der Filmschicht in mit wasserlöslichen multifunktionellen Verbindungen in einem hydrophilen Lösungsmittel, z.B. in Wasser oder Lösungsmittelgemischen, die Anteile hydrophiler Lösungsmittel enthalten, wie wässrigen Lösungen von Aceton, Dimethylformamid oder N-Methylpyrrolidon, durchgeführt werden.

Die erhaltenen Membranen sind gemäss ihrer Porengrösse als UF- oder UO-Membranen geeignet, können aaber auch als UF-UO-Zwischenmembranen klassiert werden und können z.B. bei Drücken von 5 bis 50 bar und Trenngrenzen (cut-offs) von 200 bis 2000 (Molekulargewichte) eingesetzt werden. Die Trenngrenzen sind im Vergleich mit nicht-modifizierten Polystyrolmembranen um einen Faktor von 2 bis 5 herabgesetzt, wobei der Salzrückhalt nicht im gleichen Masse steigt.

Die Ausgangsmembranen (Membranen vor der Modifikation), die erfingungsgemäss eingesetzt werden können weisen durchschnittliche Porengrössen von 10 bis 5000 Å auf und können z.B. Ultrafiitrations- oder mikroporöse Membranen sein.

Der bevorzugte Bereich für die Porengrösse ist 10 bis 1000 Å, wobei der Bereich von 10 bis 200 Å insbesondere geeignet ist, um optimale Rückhalteeigenschaften bei gleichzeitig gutem Flux zu erreichen.

Ein weiterer Gegenstand der vorliegenden Erfindung ist die aus dem modifizierten Polystyrol bestehende Membran, die als Film auf einen(m) porösen Träger gegossen (gebunden) ist.

Weitere Gegenstände der vorliegenden Erfindung sind Verfahren zur Herstellung der erfindungsgemässen Membranen bzw. Kompositmembranen (bestehend aus dünnen Filmen modifizierter Polymere, die mit einem porösen Träger verbunden sind) sowie ihre Verwendung auf dem Gebiet der Konzentrierung und Reinigung von Flüssigkeiten (Lösungen), z.B. bei der Entsalzung von Lösungen organischer Verbindungen (Farbstoffen) oder bei der Abwasserreinigung.

Diese und andere Gegenstände der vorliegenden Erfindung werden nachfolgend weiter erläutert.

Geeignete Styrolpolymere können durch Polymerisation aus Styrolmonomeren hergestellt werden, die modifizierbare Gruppen enthalten; es sind z.B. Homopolystyrole (mit den genannten modifizierbaren Gruppen), Copolymere aus Styrol oder anderen äthylenisch ungesättigten Comonomeren der Formel

(2) 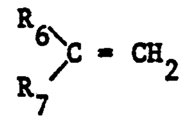 ,

worin $R_6$ und $R_7$ die angegebenen Bedeutungen haben,

und einem Styrol mit modifizierbaren Gruppen, oder auch Terpolymere und Quaterpolymere aus z.B. einem Styrol mit modifizierbaren Gruppen, Styrol und (einem) von (unsubstituiertem) Styrol verschiedenen Comonomer(en) der Formel (2) oder aus einem Styrol mit modifizierbaren Gruppen und zwei von (unsubstituiertem) Styrol verschiedenen Comonomeren der Formel (2); ferner sind auch Gemische aus Polystyrol oder aus Copolymeren auf Basis von Polystyrol mit anderen Homo- oder Copolymeren geeignet.

Stellt man die Styrolpolymeren nicht aus den zuvor angegebenen Monomeren her, sondern liegen bereits Polymere (z.B. Homo-, Co-, Ter- oder Quaterpolymere) vor, so können auch in diese Polymere (Polymergemische) reaktive Gruppen eingeführt werden, die dann erfindungsgemäss modifiziert werden können.

Die reaktiven Gruppen können in den Phenylring des Styrols, in ein Comonomer, durch Modifikation einer Seitenkette (z.B. $CH_3 \rightarrow CH_2X$) oder in die Hauptkette des Polymers (z.B. α-Bromstyroleinheiten) nach bekannten chemischen Verfahren eingeführt werden.

Bevor also reaktive Gruppen in die Styrolpolymeren eingeführt werden (und diese dann weiter modifiziert werden) können diese z.B. durch folgende Struktureinheiten wie folgt definiert werden:

$-[S]-$

$-[S]-$ $-[SM]-$

$-[SM]-$ $-[M_1]-$

$-[S]-$ $-[M_1]-$

$-[S]-$ $-[SM]-$ $-[M_1]-$

$-[S]-$ $-[SM]-$ $-[M_1]-$ $-[M_2]-$

$-[S]-$ $-[M_1]-$ $-[M_2]-$

S = Styrol, SM = substituiertes Styrol,
$M_1$ = Comonomer, von S und SM verschieden
$M_2$ = Comonomer, von $M_1$ verschieden.

Beispiele für substituierte Styrole sowie für die Comonomeren $M_1$ und $M_2$ sind: o,m,p-Cyanostyrol, o,m,p-Hydroxystyrol, o,m,p-Aminostyrol, Vinylphenylisocyanat, 1,4-Dihydroxystyrol, Vinylbenzylamin, p-Mercaptostyrol,

Halogenalkylstyrole mit 1 bis 6, vorzugsweise einem Kohlenstoffatom im Alkylrest: Chlormethyl-, Brommethyl- oder Jodmethylstyrole;

Hydroxyalkylstyrole mit 1 bis 6, vorzugsweise einem Kohlenstoffatom im Alkylrest: Hydroxymethylstyrole;

Cyanoalkylstyrole mit 2 bis 6, vorzugsweise 2 Kohlenstoffatomen im Alkylrest: Cyanomethylstyrole;

Aminoalkylstyrole mit 1 bis 6, vorzugsweise einem Kohlenstoffatom im Alkylrest: Aminomethylstyrole;

Mercaptoalkylstyrole mit 1 bis 6, vorzugsweise einem Kohlenstoffatom im Alkylrest: Mercaptomethylstyrole.

Als Comonomere $M_1$ oder $M_2$ kommen z.B. infrage: Acrylnitril, Methacrylnitril, Methylmethacrylat, Methylacrylat und andere Ester niedermolekularer Alkohole, Vinylacetat, Vinylidenchlorid, Vinylidenfluorid, Vinylfluorid, Acrylsäure, Methacrylsäure und Vinyläther (1 bis 4 Kohlenstoffatome im Ätherteil).

Bevorzugt sind Copolymere (und die daraus erhaltenen Membranen) aus Struktureinheiten des reaktive Gruppen aufweisenden Styrols, modifiziert durch chemische Umsetzung gemäss (A), (B) oder (C), wobei der Substitutionsgrad der reaktiven Gruppen an den Phenylringen des Styrols 0,3 bis 3,5 mäq/g beträgt, und Struktureinheiten, die sich von Vinyl-, Halogenvinyl- oder Acrylverbindungen ableiten.

Beispiele für bevorzugte Comonomere, die man bei der Polymerisation einsetzen kann, sind Styrol oder andere Comonomere, zusammen mit p-Cyanostyrol, Chlormethylstyrol, p-Aminostyrol, p-Hydroxystyrol oder Mercaptostyrol. Der Gehalt an reaktiven Gruppen im Polymer soll zwischen 0,3 und 3,5 mäq/g und vorzugsweise zwischen 1,0 und 2,5 (1,0 und 2,0) mäq/g liegen.

Liegen bereits Polymere vor, so kann man z.B. reaktive Gruppen wie folgt in das Polymer einführen: Nitrierung und anschliessende Reduktion zum Amin; Chlormethylierung; Halogenierung aromatisch gebundener Methylgruppen mit N-Bromsuccinimid; Bildung einer Methylolfunktion aus Formaldehyd; direkte Aminomethylierung mit N-(Hydroxymethyl)-phthalimid oder N-(Chlormethyl)-phthalimid (Tetrahedron Letters 42, 3795-3798, 1976).

Diese reaktiven Gruppen dienen direkt oder nach weiterer chemischer Umsetzung zur Vernetzung des Polymers und zur chemischen Bindung eines polyfunktionellen Oligomers oder Polymers, das seinerseits selbst

mit einer polyfunktionellen ionischen oder nichtionischen Verbindung umgesetzt wird.

Bevorzugt verwendbare Copolymere mit Struktureinheiten der Formeln (1a) und (1b) sind solche, die den Formeln

(3a) 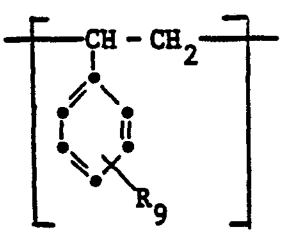 (3b) 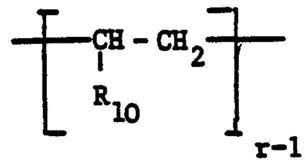

entsprechen,

worin $R_{10}$ -COOH, $-CONH_2$ oder -CN, r 1 oder 2 und $R_9$ Wasserstoff oder $-CH_2NH_2$, $-CH_2OH$ oder $-NH_2$ chemisch modifiziert durch Umsetzung mit (a), (b) und (c), $-CH_2X$, worin X Halogen ist, chemisch modifiziert durch Umsetzung mit (b) und (c), oder

$-CH_2CN$ oder -CN ist, chemisch modifiziert durch Umsetzung mit Hydroxylamin, (a), (b) und (c), und der Substitutionsgrad der von Wasserstoff verschiedenen Substituenten $R_9$ zwischen 0,3 und 3,5 mäq/g liegt.

$R_5$ in Formel (1) ist Wasserstoff, Alkyl mit 1 bis 4 Kohlenstoffatomen, wie z.B. Äthyl, Propyl, Isopropyl, Butyl und insbesondere Methyl, ferner Halogen, wie Fluor, Brom und insbesondere Chlor.

$R_6$ kann die gleichen Bedeutungen haben, wobei er in der Bedeutung von Alkyl in der Regel nur Methyl ist.

$R_7$ ist Carboxyl (-COOH), gegebenenfalls verestert (Carbalkoxy) mit Alkanolen mit 1 bis 8 Kohlenstoffatomen wie z.B. mit Methanol, Äthanol, Propanol, Butylalkohol oder Octylalkohol.

$R_7$ ist ferner Carbonamid ($-CONH_2$) gegebenenfalls N-mono- oder N,N-disubstituiert mit beispielsweise Niederalkyl mit 1 bis 5 Kohlenstoffatomen.

In der Bedeutung von -CN für $R_7$ handelt es sich bei den Struktureinheiten um solche, die von (Meth)acrylnitril (sofern $R_6$ Wasserstoff oder Methyl ist) abgeleitet sind. Copolymere mit diesen Struktureinheiten sind für die Herstellung der erfindungsgemässen Membranen besonders geeignet. Ebenfalls bevorzugte Comonomere sind (Meth)acrylsäure, (Meth)acrylsäuremethylester oder (Meth)acrylamid.

Ganz besonders bevorzugt sind Membranen aus modifizierten Polystyrolen und Struktureinheiten der Formeln.

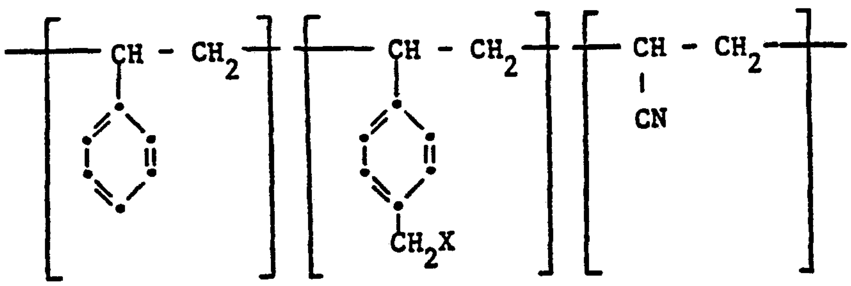 ,

worin X Halogen, insbesondere Chlor ist, und der $-CH_2X$-Rest durch Umsetzung mit einem Polyäthylenimin und einem reaktiven Azofarbstoff, der Sulfonsäuregruppen und Dichlortriazinylreaktivreste aufweist, modifiziert ist, wobei der Substitutionsgrad des Substituenten $-CH_2X$ zwischen 0,3 und 3,5 mäq/g liegt.

Die erfindungsgemäss verwendeten Polymeren auf Styrolbasis (gegebenenfalls mit reaktiven Gruppen, aber noch nicht modifiziert im Sinne der vorliegenden Erfindung) sind Handelsprodukte, mindestens aber sind sie literaturbekannt oder können nach bekannten Verfahren hergestellt werden.

Es werden selbstverständlich nur solche Polymeren ausgewählt, die gute Filmbildner sind. Ihre mittleren Molekulargewichte variieren zwischen 5000 und 60 000, wobei Molekulargewichte zwischen 20 000 und 40 000 bevorzugt sind.

Insbesondere in die aromatischen Gruppen der Styrol-Polymeren können leicht reaktive Reste eingeführt werden. Die Herstellung entsprechender reaktiver Monomere kann vor der Polymerisation erfolgen oder aber das Polymer selbst kann vor der Herstellung der Giesslösung oder auch in der Giesslösung mit den notwendigen reaktiven Gruppen versehen werden. Schliesslich kann auch die Membran selbst noch chemischen Reaktionen zur Einführung von Reaktivgruppen unterzogen werden, die dann erfindungsgemäss weiter modifiziert werden können. Eine Kombination dieser Verfahrensschritte, z.B. aufgeteilt auf die verschiedenen Verarbeitungsformen (Monomer, Polymer, Giesslösung, Membran), ist ebenfalls möglich.

In einigen Fällen ist es auch möglich nur die reaktiven Gruppen an der Oberfläche oder in den Poren der Membranen zu modifizieren und den Rest unverändert zu lassen.

Die Herstellung der erfindungsgemässen Membranen kann nun im wesentlichen nach zwei Methoden

erfolgen. Entweder giesst man ein nichtmodifiziertes Polymer (ohne Reaktivgruppierungen) auf einen Träger, bildet eine Membran und führt die chemischen Reaktionen (Modifikationen) mit der Membran selbst durch oder man setzt bereits sog. reaktive (Reaktivgruppen enthaltende) Polymere ein, die dann weiter modifiziert werden.

Demgemäss betrifft die vorliegende Erfindung auch ein Verfahren zur Herstellung von modifizierten Membranen auf Styrolbasis, das dadurch gekennzeichnet ist, dass man eine Lösung auf ein Trägermaterial giesst, die ein (I) Polymer auf Styrolbasis und (II) ein polares organisches Lösungsmittel oder Lösungsmittelgemisch für das Polystyrol sowie gegebenenfalls Teillösungsmittel, Nicht-Lösungsmittel, Elektrolyte und/oder oberflächenaktive Hilfsmittel enthält, die Membran mit einem Lösungsmittel, das mit dem polaren Lösungsmittel mischbar, aber ein Nichtlösungsmittel für die Membran ist, in Kontakt bringt, um die Membran zu koagulieren, in die so erhaltene Membran die reaktiven Gruppen gemäss (A), (B) und (C) wie angegeben einführt, sofern sie nicht durch Auswahl geeigneter Monomerer bereits im Polymer vorhanden sind, und dann chemisch modifiziert durch

(A) Umsetzung mit

(a) organischen Verbindungen, die reaktive Mehrfachbindungen oder Epoxid-, Aziridin-, Aldehyd-, Imidat-, Isocyanat-, Isothiocyanat-, Hydroxyl-, Säureanhydrid-, Säurechlorid-, Kohlensäureimidhalogenid- oder N-Methylolgruppen enthalten oder Verbindungen, die als tertiäre Amine oder als Anionen abspaltbare Substituenten, oder mit Verbindungen, die Kombinationen dieser Gruppen (Substituenten) enthalten,

(b) hydrophilen, polyfunktionellen, aliphatischen oder aromatischen Oligomeren oder Polymeren, die Amino-, Hydroxyl- oder Thiolgruppen enthalten,

und

(c) nicht-ionischen Verbindungen oder ionischen Verbindungen mit mindestens einer Sulfo-($-SO_3H$)-, Carboxyl- ($-COOH$)- oder Ammoniumgruppe, wobei die Sulfo- und Carboxylgruppe auch in Salzform vorliegen kann, und mindestens einer, vorzugsweise zwei, mit der Komponente (b) reaktionsfähigen Gruppe(n), sofern die reaktiven Gruppen den Formeln

$-R_1NH_2$, $-R_2OH$ oder $-R_2SH$ entsprechen, worin $-R_1-$ eine chemische Bindung, $-C_mH_{2m}-$, $-(CH_2)_q-NH-(CH_2)_{2-6}-$, $-(CH_2)_q-O-(CH)_{2-6}-$,

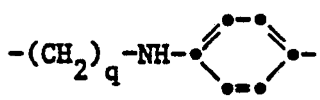 , 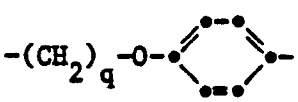

oder 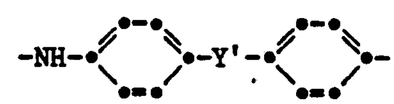 , Y' —O—, —S—, —SO$_2$, —C(CH$_3$)$_2$,

$-R_2-$ eine chemische Bindung oder $-C_mH_{2m}-$,

m eine ganze Zahl von 1 bis 6 und q Null oder 1 ist, oder

(B) Umsetzung mit (b) und (c), sofern die reaktiven Gruppen den Formeln $-R_3X$, $-R_4CHO$, $-NCO$ oder $-NCS$ entsprechen, worin $R_3$ eine chemische Bindung an einen aliphatischen Rest oder $-C_mH_{2m}-$, $-R_4-$ eine chemische Bindung oder $-C_nH_{2n}-$, X Halogen und n eine ganze Zahl von 1 bis 5 ist und m die angegebene Bedeutung hat, oder

(C) Umsetzung mit Hydroxylamin, (a), (b) und (c), sofern die reaktive Gruppe der Formel $-R_4CN$ entspricht, worin $R_4$ die angegebene Bedeutung hat, und der Substitutionsgrad von $R_5$ in der Bedeutung halogen oder der von Wasserstoff verschiedenen Substituenten $R_8$ zwischen 0,3 und 3,5 mäq/g liegt, und anschliessend gegebenenfalls die gebildete Membran von dem (porösen) Träger löst.

Sind die reaktiven Gruppen nicht bereits im Polymer vorhanden, so kann man sie nach üblichen chemischen Methoden in das Polymer einführen.

So kann man z.B. die Gruppen $R_1NH_2$, $-R_2OH$ und $-R_2SH$, worin $R_1$ und $R_2$ die angegebenen Bedeutungen haben, ausgenommen die direkte chemische Bindung, durch Haloalkylierung und anschliessende Umsetzung mit Ammoniak oder Aminen, Alkalihydroxyden oder Alkalihydrosulfiden, die Gruppen $-R_3X$ und $-R_4CHO$, worin $R_3$ und $R_4$ die angegebenen Bedeutungen haben, durch Haloalkylierung und gegebenenfalls weitere Umsetzung mit alkalisch wirkenden Verbindungen, z.B. den Alkalimetallhydroxyden, und die Gruppe $-R_4CN$ durch Haloalkylierung, sofern $R_4$ keine direkte chemische Bindung ist, und weitere Umsetzung mit einer Cyanverbindung, z.B. einem Alkalimetallcyanid, in die Polymeren einführen.

Sind reaktive Gruppen bereits im Polymer (z.B. durch Auswahl entsprechender Monomeren) vorhanden wie z.B. Vinyl- oder Oxirangruppen, sowie insbesondere Amino-, Hydroxyl-, Mercapto-, Aldehyd-, Cyano-, Cyanato- und Isocyanatogruppen und Halogenatome (F, Cl, Br, J), so können diese als Substituenten in der Haupt- oder in Seitenketten vorliegen. Diese können dann leicht durch chemische Umsetzungen modifiziert werden und führen den erfindungsgemässen Membranen.

Am Beispiel der Halogenmethyl(Chlormethyl)gruppe, die leicht in aromatische Systeme eingeführt werden kann (US-PS 4 029 582), wird gezeigt, welche weiteren chemischen Umsetzungen möglich und leicht durchführbar sind und welche Gruppen (für eine weitere Modifikation) z.B. erhalten werden können:

$-CH_2NH_2$, $-CH_2NH(CH_2)_{2-6}NH_2$, $-CH_2O(CH_2)_{2-6}NH_2$, $-CH_2NH-$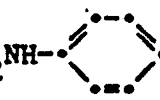$-NH_2$

$-CH_2O-$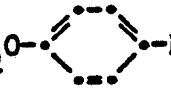$-NH_2$, $-CH_2OH$, $-CH_2SH$, $-CHO$, $-CH_2CN$, $-CH_2OR_aOH$, worin

$R_a$ Alkylen ($C_2$-$C_6$) oder Phenylen ist.

Der Gehalt an reaktiven Gruppen in der Membran ist abhängig von dem Herstellungsverfahren zur Einführung dieser Gruppen aber auch von der Veränderung der Membran durch diese Gruppen (z.B. Wasserlöslichkeit und Sprödigkeit der Membran). So können z.B. $-CH_2Cl$-Gruppen in einer Menge von 0,3 bis 3,5 mäq/g in eine Membran eingeführt werden, während ein Amin-($-NH_2$)-gehalt von über etwa 2,0 mäq/g (Bereich 0,3 bis 2,0 mäq/g) die Polymeren schwerer löslich macht und nur wenig quellbare Membranen liefert.

Höhere Amingehalte können jedoch gegebenenfalls über chlormethylierte Polystyrole (2,5 mäq/g) und Austausch des Chloratoms durch $-NH_2$ erreicht werden.

Wenn di- oder polyfunktionelle Amine verwendet werden, erfolgt gleichzeitig eine Vernetzung der Membran. Durch nukleophilen Austausch des Halogenatoms in der $-CH_2Cl$ Gruppe mit -CN erhält man $-CH_2CN$ Gruppen, deren Gehalt vorzugsweise nicht über 1,5 mäq/g (Bereich 0,3 bis 1,5 mäq/g) steigen sollte, um die Membranen nicht zu spröde werden zu lassen.

Eine solche Reaktion sollte vorzugsweise nur an der Oberfläche oder in den Poren der Membran durchgeführt werden, da dann das Problem der Sprödigkeit gemindert werden kann.

Die Aldehydgruppe (-CHO) kann durch Alkalibehandlung ($NaHCO_3$) eines chlormethylierten Polystyrols bei höheren Temperaturen (140°C) in Dimethylsulfoxyd eingeführt werden. Durch Extraktion des Reaktionsgemisches mit Chloroform und anschliessende Ausfällung in Wasser wird das Polymer erhalten (J.M. Frechet, C. Schuerch, JACS 93, 492 (1971)).

Die Konzentration der Reaktivgruppierungen kann auch sehr viel höher (z.B. 0,3 bis 6 mäq/g) sein, wenn die Polymeren aus z.B. Monomeren, die diese Reaktivgruppierungen bereits enthalten, hergestellt werden.

Bei der nachfolgenden Modifikation werden jedoch nicht alle diese Gruppierungen in eine chemische Reaktion mit einbezogen, so dass die Konzentration der tatsächlich an der Reaktion beteiligten Gruppen im oben angegebenen Bereich liegt. Eine gewisse Kontrolle der Reaktion ist notwendig, um eine übermässige Vernetzung und die Neigung zur Sprödigkeit der Membranen zu vermeiden.

Die untere Grenze der Konzentration an Reaktivgruppierungen wird durch die Notwendigkeit einer gewissen Vernetzung der Polymeren und die Bereitstellung von reaktiven Zentren für die weiteren Modifikationsschritte gegeben. Sie ist von der jeweiligen Reaktivgruppierung und dem Molekulargewicht des hydrophilen Oligomers bzw. Polymers (Reaktionskomponente bzw. Reaktionsschritt (b)) abhängig und beträgt etwa 0,3 mäq/g. Bevorzugt als Minimalkonzentration für die Reaktivgruppierungen ist mindestens 0,3 mäq/g (Gesamtbereich 0,3 bis 3,5, insbesondere 1,0 bis 2,5 mäq/g).

Die Membranherstellung kann nach verschiedenen literaturbekannten Giessverfahren erfolgen (z.B. US-PS 4 029 582, US-PS 3 556 305, US-PS 3 615 024, US-PS 3 567 810, GB-PS 2 000 720). Das Polymer oder das modifizierte Polymer können in einem geeigneten Lösungsmittel oder in einem Lösungsmittelgemisch gelöst werden (z.B. N-Methylpyrrolidon (NMP), Dimethylsulfoxid (DMSO), Dimethylformamid (DMF), Hexamethylphosphoramid, N,N-Dimethylacetamid, Dioxan). Diese Lösung kann weitere Lösungsmittel (Co-Solventien), Teillösungsmittel, Nicht-Lösungsmittel, Salze, Tenside oder Elektrolyte für die Modifikation der Membranstruktur und der Beeinflussung ihrer Rückfluss und Rückhalteeigenschaften enthalten (z.B. Aceton, Methanol, Ethanol, Formamid, Wasser, Methylethylketon, Triethylphosphat, Schwefelsäure, Salzsäure, Fettsäurepartialester von Zuckeralkoholen bzw. deren Ethylenoxidaddukte, Natriumdodecylsulfat (SDS), Natriumdodecylbenzolsulfonat, Natriumhydroxid, Kaliumchlorid, Zinkchlorid, Calciumchlorid, Lithiumnitrat, Lithiumchlorid oder Magnesiumperchlorat). Die Giesslösung wird nach üblichen Methoden filtriert (z.B. durch Druckfiltration durch ein Mikroporfilter oder durch Zentrifugieren) und dann auf ein Substrat wie z.B. Glas, Metall, Papier oder Kunststoff gegossen und von diesem Substrat dann wieder entfernt. Es ist jedoch vorteilhaft, die Giesslösung auf ein poröses Trägermaterial zu giessen, von der die Membran nicht entfernt werden muss. Solche porösen Trägermaterialien können Non-wovens oder auch Gewebe sein, wie z.B. solche aus Cellulose, Polyethylen, Polypropylen, Nylon, Polyvinylchlorid und seinen Copolymeren, Polystyrol und Polyethylenterephthalat (Polyester), Polyvinylidenchlorid, Polytetrafluorethylen und Glasfasern. Die Membran kann auch in Form einer Hohlfaser oder eines Röhrchens gegossen werden. In diesem Fall ist ein Trägermaterial für den praktischen Gebrauch nicht notwendig.

Die Konzentration des Polymers in der Giesslösung ist abhängig von dessen Molekulargewicht und den verschiedenen Zusätzen und kann zwischen etwa 5 und 80 Gew.% variieren. Vorzugsweise beträgt die Konzentration 10 bis 50 und insbesondere 15 bis 30%. Die Temperatur beim Herstellen der Membran kann zwischen -20 und + 100°C variieren, bevorzugt ist jedoch der Bereich zwischen 0 und 60°C. Auch der Temperaturbereich hängt insbesondere vom Molekulargewicht des Polymers, sowie von den Cosolventien und Additiven in der Giesslösung ab.

Das Giessen der Polymerlösung auf ein Trägermaterial erfolgt nach üblichen und bekannten Methoden. Die Dicke des feuchten Polymerfilms kann zwischen 5 und 2000 Mikrometer (µm) schwanken. Bevorzugt ist jedoch ein Bereich zwischen 50 und 8000 Mikrometer, wobei der Bereich zwischen 100 und 500 Mikrometer besonders bevorzugt ist. Der feuchte Polymerfilm und das Trägermaterial werden dann sofort oder nach einer Trocknungsphase (zwischen 5 Sekunden und 48 Stunden) bei Raumtemperatur oder leicht erhöhter Temperatur, gegebenenfalls auch unter Vakuum oder unter Anwendung einer Kombination dieser Massnahmen in ein sogenanntes Gelierbad eingetaucht. Dieses Gelierbad enthält ein Lösungsmittel, in dem das Polymer bzw. die daraus hergestellte Membran nicht löslich sind. Solche Gelierbäder enthalten normalweise Wasser oder Wasser mit einem kleinen Anteil eines Lösungsmittels (z.B. DMF, NMP) und/oder Tenside (z.B. Natriumdodecylsulfat) bei Temparaturen von 0 bis 70°C. Ein Beispiel für ein üblicherweise verwendetes Gelierungsbad ist Wasser von 4°C mit einem Gehalt von 0,5 % SDS. Enthält die polymere Giesslösung Komponenten, die durch Wasser oder ein anderes Lösungsmittel ausgewaschen (ausgelaugt) werden können, so wird diese Giesslösung vergossen und getrocknet, ehe man die gebildeten Membranen dann in das Gelierbad gibt. Nach dem Eintauchen in das Gelierbad werden die auswaschbaren Komponenten entfernt und man erhält eine poröse Membran.

In einer dritten Variation wird eine Polymerlösung verwendet, die keine auswaschbaren Komponenten enthält. Diese wird wie üblich vergossen und danngetrocknet. Die Bildung der Poren der Membran hängt in diesem Fall von der Kombination der physikalisch-chemischen Eigenschaffen des Polymermaterials und des Lösungsmittels ab oder aber die Poren werden erst durch nachfolgende chemische Reaktion gebildet. Die beschriebenen Herstellungsverfahren sind für die Herstellung von Membranen geeignet, die erfindungsgemäss weiter modifiziert werden können. Diese chemische Modifikation der Membranen kann nach verschiedenen Verfahren durchgeführt werden, vorzugsweise werden jedoch die nachfolgenden Reaktionsschritte eingehalten, wodurch eine Polymerschicht an die Trägermembran gebunden wird und diese Trägermembran mit der Polymerschicht vernetzt wird:

(a) Zuerst erfolgt die Reaktion einer polyfunktionellen (monomeren) Verbindung mit den funktionellen Gruppen (z.B. Halogenatomen oder Amino- oder Hydroxylgruppen) der polymeren Membran, die als Substituenten der Polymerkette oder als integraler Bestandteil dieser Polymerkette vorhanden sein können. Nicht alle reaktiven Gruppen dieser polyfunktionellen Verbindung werden an der Vernetzung des Polymers teilnehmen, sondern es wird ein Teil verfügbar bleiben, um das hydrophile Oligomer oder Polymer an die Membran zu binden (Stufe (b)). Handelt es sich bei den funktionellen Gruppen, die in der Membran vorhanden sind, um z.B Halogenalkyl- oder Aldehydgruppierungen, Cyanato- oder Isocyanatogruppierungen, so kann als polyfunktionelle Verbindung das zuvor genannte hydrophile Oligomer oder Polymer im Reaktionsschritt (a) verwendet werden und so der Reaktionsschritt (b) ausgelassen werden.

(b) Reaktive Gruppen der polyfunktionellen Verbindung, die in Stufe (a) nicht reagiert haben, werden verwendet, um ein hydrophiles Oligomer oder Polymer an die gemäss (a) gebildete Membran zu binden. Dieses so gebundene Oligomer oder Polymer bildet einen dünnen Film aus, der zusätzliche reaktive Gruppen für die weitere Reaktion mit der Komponente (c) enthält, z.B. mit nichtionischen Verbindungen, die das Oligomer oder Polymer vernetzen und/oder ionischen Verbindungen, die ebenfalls eine Vernetzung bewirken, zusätzlich aber noch ionische Gruppen einführen. Die funktionellen Gruppen können z.B. die gleichen sein, wie sie im nachfolgenden Schritt (c) verwendet werden.

(c) Ionische (anionische) oder hydrophile (nichtionische) polyfunktionelle Verbindungen werden mit den funktionellen Gruppen des Oligomers oder Polymers gemäss Reaktionsschritt (b) umgesetzt und vernetzen das Oligomer oder Polymer und/oder führen gleichzeitig ionische Gruppen ein.

Die erfindungsgemässen Membranen bestehen also im wesentlichen aus einer Basismembran (Polystyrol), an die ein hydrophiles Oligomer oder Polymer oder ein Polyelektrolyt gebunden ist, wobei sich diese im wesentlichen auf der Oberfläche der Basismembran oder in deren Poren befindet.

Als Komponente (a) geeignete Verbindungen sind in der Regel monomere Verbindungen mit vernetzenden Eigenschaften, die sowohl mit der Polystyrolmembran (mit reaktiven Gruppen) als auch mit der Komponente (b) (Oligomer oder Polymer) eine chemische Bindung eingehen können. Ihre Reaktivität verdanken diese mindestens zwei funktionelle Gruppen aufweisenden Verbindungen additionsfähigen Mehrfachbindungen, Epoxidgruppen, Aziridingruppen, Aldehydgruppen, Imidatgruppen. Isocyanat- oder Isothiocyanatgruppen, ferner Hydroxylgruppen, Anhydridgruppen, Acylhalogenidgruppen, Kohlensäureimidhalogenidgruppen, sowie N-Methylolgruppen, oder einem als tertiäres Amin oder vorzugsweise einem als Anion abspaltbaren Substituenten, wobei diese Gruppierungen und Substituenten auch in Kombination vorkommen können. Als addierende Mehrfachbindungen enthalten sie beispielsweise die Gruppierungen

$$-CO-\overset{|}{C}=\overset{|}{C}-,\ -CO-C\equiv C-\ \text{oder}\ -SO_2-\overset{|}{C}=\overset{|}{C}-,$$

die gegebenenfalls weiter substituiert sind. Auch die Isocyanat- oder Isothiocyanatgruppe kann zu diesen Gruppen gezählt werden. Als abspaltbare Gruppen kann die Komponente (a) quaternäre Ammoniumgruppen, die als tert. Amine abgespaltet werden, wie z.B. die Trimethylammonium- oder Pyridiniumgruppe, oder auch die Sulfoniumgruppe aufweisen. Als bevorzugte reaktionsfähige Gruppe enthält die Komponente (a) jedoch

Substituenten mit einem als Anion abspaltbaren Rest, vorzugsweise mit reaktiven Halogenatomen. Derartige als Anion abspaltbare Reste verdanken ihre Reaktivität zum Beispiel dem Einfluss elektrophiler Gruppen, wie der -CO- oder $-SO_2$-Gruppe in gesättigten, aliphatischen Resten. Sie verdanken ihre Reaktivität auch dem Einfluss eines quaternären Stickstoffatoms, wie in der Gruppe

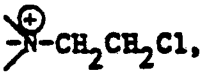

oder in aromatischen Resten dem Einfluss von in o- und p-Stellung stehenden elektrophilen Gruppen, beispielsweise Nitro, Kohlenwasserstoffsulfonyl- oder Kohlenwasserstoffcarbonylgruppen, oder aber der Bindung an ein Ringkohlenstoffatom, welches einem tertiären Ringstickstoffatom benachbart ist, wie in Halogentriazin oder Halogenpyrimidinresten.

Als besonders vorteilhaft haben sich als Komponente (a) cyclische Kohlensäureimidhalogenide und vor allem mindestens zwei reaktive Substituenten enthaltende Halogendi- oder -triazinverbindungen erwiesen. Tetrachlorpyrimidin und vor allem Cyanurchlorid sind dabei besonders vorteilhaft.

Bei den hier als Komponente (a) verwendeten, cyclischen Kohlensäureimid-halogeniden handelt es sich vorteilhafterweise um

($A_1$) s-Triazinverbindungen mit mindestens zwei an Kohlenstoffatome gebundenen gleiche oder verschiedene Halogenatome, wie z.B. Cyanurchlorid, Cyanurfluorid, Cyanurbromid sowie um primäre Kondensationsprodukte aus Cyanurfluorid bzw. Cyanurchlorid bzw. Cyanurbromid mit z.B. Wasser, Ammoniak, Aminen, Alkanolen, Alkylmercaptanen, Phenolen oder Thiophenolen;

($B_1$) Pyrimidine mit mindestens zwei reaktionsfähigen gleichen oder verschiedenen Halogenatomen, wie 2,4,6-Trichlor-, 2,4,6-Trifluor- oder 2,4,6-Tribrompyridin, die in 5-Stellung beispielsweise durch eine Alkyl-, Alkenyl-, Phenyl-, Carboxyl-, Cyan-, Nitro-, Chlormethyl-, Chlorvinyl-, Carbalkoxy-, Carboxymethyl-, Alkylsulfonyl-, Carbonsäureamid- oder Sulfonsäureamidgruppe, vorzugsweise jedoch durch Halogen, wie z.B. Chlor, Brom oder Fluor, weitersubstituiert sein können. Besonders geeignete Halogenpyrimidine sind 2,4,6-Trichlor- und 2,4,5,6-Tetrachlorpyrimidin;

($C_1$) Halogenpyrimidincarbonsäurehalogenide, wie z.B. Dichlorpyrimidin-5- oder -6-carbonsäurechlorid;

(D) 2,3-Dihalogen-chinoxalin, -chinazolin- oder -phthalazin-carbonsäure- oder -sulfonsäurehalogenide, wie 2,3-Dichlorchinoxalin-6-carbonsäurechlorid bzw. -6-sulfonsäurechlorid, 2,6-Dichlorchinazolin-6- oder -7-carbonsäurechlorid, 1,4-Dichlorphthalazin-6-carbonsäurechlorid oder -bromid;

(E) 2-Halogen-benzo-thiazol- bzw. -oxazolcarbonsäure- oder -sulfonsäurehalogenide, wie 2-Chlorbenzothiazol- bzw. -oxazol-5- oder -6-carbonsäurechlorid bzw. -5- oder -6-sulfonsäurechlorid;

(F) Halogen-6-pyridazonyl-1-alkanoylhalogenide oder 1-benzoylhalogenide, wie z.B. 4,5-Dichlor-6-pyridazonyl-1-propionylchlorid bzw. -1-benzoylchlorid.

Weitere mindestens zwei reaktive Substituenten aufweisende Verbindungen, die als Komponente (b) eingesetzt werden können, sind beispielsweise

(G) Anhydride oder Halogenide aliphatischer, α,β-ungesättigter Monooder Dicarbonsäuren mit vorzugsweise 3 bis 5 Kohlenstoffatomen, wie Maleinsäureanhydrid, Acrylsäurechlorid, Methacrylsäurechlorid und Propionsäurechlorid;

(H) Anhydride oder Halogenide von reaktiven Halogenatomen enthaltenden aliphatischen Mono- oder Dicarbonsäuren mit vorzugsweise 3 bis 10 Kohlenstoffatomen oder aromatischen Carbonsäuren, wie z.B. Chloracetylchlorid, β-Chlorpropionsäurechlorid, α,β-Dibrompropionsäurechlorid, α-Chlor- oder β-Chloracrylsäurechlorid, Chlormaleinsäureanhydrid, β-Chlorcrotonsäurechlorid bzw. Fluor-nitro- oder Chlornitrobenzoesäurehalogenide oder -sulfonsäurehalogenide, in welchen das Fluor- bzw. das Chloratom in o-und/oder p-Stellung zu der Nitrogruppe steht;

(I) Carbonsäure-N-Methylolamide oder reaktionsfähige, funktionelle Derivate dieser Methylolverbindungen. Als Carbonsäure-N-methylolamide kommen vor allem N-Methylolchloracetamid, N-Methylol-bromacetamid, N-Methylol-α,β-dichlor- oder dibrompropionamid, N-Methylol-acrylamid, N-methylol-α-chlor- oder -α-bromacrylamid in Betracht. Als reaktionsfähige Derivate der Carbonsäure-N-methylolamide kommen beispielsweise die entsprechenden N-Chlormethyl- oder N-Brommethylamide in Frage;

(J) gegebenenfalls verätherte N-Methylolharnstoffe oder N-Methylolmelamine, wie z.B. N,N-Dimethylolharnstoff, N,N-Dimethylolharnstoff-dimethyläther, N,N'-Dimethyloläthylen- oder -propylenharnstoff, 4,5-Dihydroxy-, N,N'-di-methyloläthylenharnstoff oder -dimethyläther bzw. Di-bis -hexamethylolmelamine, Trimethylolmelamindimethyläther, Pentamethylolmelamin-di- oder -trimethyläther, Hexamethylolmelamin-penta- oder hexamethyläther;

>(K) Kondensationsprodukte von mindestens eine phenolische Hydroxylgruppe aufweisenden Diarylalkanen mit Halogenhydrinen, z.B. das Diepoxid aus 2,2-Bis(4'-hydroxyphenyl)-propan und Epichlorhydrin, sowie auch Glycerin-triglycidäther und ferner entsprechende Diaziridine;

(L) Di-aldehyde, wie z.B. Glutar- oder Adipinaldehyd;

(M) Diisocyanate oder Diisothiocyanate, wie z.B. Alkylen-($C_2$-$C_4$)-Diisocyanate, insbesondere Äthylendiisocyanat, Phenylen- oder Alkyl-($C_2$-$C_4$)-substituierte Phenylendiisocyanate, wie z.B. Phenylen-1,4-diisocyanat oder Toluol-2,4-diisocyanat, ferner Phenylendiisothiocyanate, wie z.B. Phenylen-1,4-diisothiocyanat;

(N) Weitere reaktive Verbindungen, wie Trisacrylol-hexahydro-s-triazin, Epoxide oder Aziridine.

Hydrophile polyfunktionelle Oligomere oder Polymere werden im Reaktionsschritt (b) eingesetzt. Vorzugsweise handelt es sich um Verbindungen, welche aliphatische oder aromatische Aminogruppen enthalten, wobei diese primär, sekundär oder tertiär sein können; ferner kann diese Komponente Hydroxy- oder Thiogruppen aufweisen. Beispiele solcher Polymerer sind Polyäthylenimin (M.G.150 bis 2'000 000), gegebenenfalls teilweise alkyliert (z. B. mit Methyljodid) oder andersweitig modifiziert, Polyvinylalkohol, Cellulosederivate, wie Äthylcellulose, Carboxymethylcellulose, Hydroxymethylcellulose, Hydroxyäthylcellulose, ferner Polyvinylanilin (M.G. 200 bis 2'000 000), Polybenzylamin, Polyvinylamin (M.G. 1000 bis 2 000 000) Polyvinylmerkaptan, Polyvinylimidazolin, aminomodifizierte Polyepihalogenhydrine (GB-PS 1 558 807), Polydiallylaminderivate und Piperidinringe enthaltende Polymere (GB-PS 2 027 614), Kondensationsprodukte aus Dicyandiamid, Formaldehyd und Ammoniumchlorid (US-PS 3 290 310), Aminopolysulfone, Aminopolyarylenoxide (aminomethyliertes Polyphenylenoxid), Polyamido-polyaminepichlorhydrinaddukte, Polymere mit hydrophilen Aminogruppen (EP 8940). Polymere aus 2-Hydroxyäthyl- oder 2-Aminoäthylmethacrylat, Co-, Block- oder Pfropfpolymerisate aus diesen Monomeren und/oder Polymeren sowie weiteren, insbesondere ionische Gruppen

$$(-SO_3^{\ominus}, -COO^{\ominus}, -\overset{\oplus}{N}R_4)$$

enthaltenden Monomeren und/oder Polymeren. Beispiele hierfür sind die Copolymeren aus Styrolsulfonat (Natriumsalz)/Vinylanilin, 2-Aminoäthylmethacrylat/Acrylsäure, Vinylanilin/Vinylbenzyltrimethylammoniumchlorid oder Vinylamin/Vinylsulfonat.

Bevorzugte Komponenten (b) sind Polyvinylalkohole, Cellulosederivate, Polyvinylamine oder Polyvinylaniline und insbesondere die polyaliphatischen (acyclischen oder cyclischen) Polyalkylenimine (Polyäthylenimine) sowie auch die zuvor beispielshaft genannten Copolymeren.

Die Molgewichte der Polyäthylenimine (PEI) können wie angegeben im Bereich von 150 bis 2 000 000 liegen. Vorzugsweise beträgt ihr Molekulargewicht 1000 bis 200 000 und insbesondere 10 000 bis 70 000.

Die oligomeren oder polymeren Polyäthylenimine mit niederen Molekulargewichten (150 bis 1000) können verwendet werden, allerdings werden die Rückhalteeigenschaften der erhaltenen Membranen nicht so gut verbessert wie bei der Verwendung von Polyäthyleniminen mit höheren Molekulargewichten.

Andererseits zeigen die Polymeren mit Molgewichten über etwa 100 000 bereits eine erhöhte Viskosität und ausserdem eine geringere Reaktivität bei der Vernetzung, so dass ihr Einsatz dadurch erschwert wird.

Der gemäss (b) auf die Membran aufgebrachte Oligomer- oder Polymerfilm wird vernetzt und/oder mit ionischen Gruppen versehen durch Umsetzung mit einer polyfunktionellen Verbindung (c). Bei diesen Verbindungen kann es sich um die gleichen handeln, wie sie oben für (a) genannt sind. Vorzugsweise sind es ionische Verbindungen, die gegebenenfalls auch im Gemisch mit nichtionischen Verbindungen eingesetzt werden können.

Als ionisierbare Gruppen in der Komponente (c) oder in der Membran nach der Modifizierung sind Sulfatogruppen, Sulfonsäuregruppen, Carbonsäuregruppen, von primären, sekundären oder tertiären Aminogruppen und Wasserstoff gebildete Ammoniumgruppen oder quaternäre Ammonium-, Phosphonium- oder Sulfoniumgruppen geeignet. Besonders günstige Ergebnisse werden mit sulfonsäuregruppenhaltigen Komponenten erzielt.

Beim Vorliegen einer monomolekularen Schicht erübrigt sich normalerweise die Vernetzung und die Reaktion mit (c) dient ausschliesslich der Einführung ionischer Gruppen in die Membran. Enthält das Polymer gemäss (b) ionische Gruppen (z.B. Poly(Vinylamin/Vinylsulfonat)), werden in der Reaktionsstufe (c) vorzugsweise nicht-ionische Verbindungen verwendet.

Bevorzugt ist die Verwendung von ionischen polyfunktionellen Verbindungen, die in der Regel zu Membranen mit gutem Durchfluss und gutem Rückhaltevermögen führen.

Andererseits kann man die polyfunktionellen Verbindungen (c), wenn sie z.B. hydrophile oder teilweise wasserlöslich sind, auch nur zur Vernetzung von (b) einsetzen.

Der Vernetzungs- und (Beladungsschritt) mit ionischen Gruppen kann vorzugsweise in wässrigem Medium ausgeführt werden und unterscheidet sich daher von den üblichen Vernetzungen bei Kompositmembranen (UF/UO-Membranen).

Bevorzugte polyfunktionelle Verbindungen sind ionische Triazinyl- oder Pyrimidylderivate, wie z.B. reaktive Azofarbstoffe mit diesen Resten als Reaktivgruppierung sowie mit Sulfo-($SO_3^{\ominus}$), Carboxyl-($COO^{\ominus}$-) und/oder Ammoniumgruppen. Farblose Verbindungen mit den gleichen Reaktivgruppierungen sind ebenfalls geeignet.

Die Vernetzung kann durch Bildung von chemischen Bindungen, elektrostatischen Wechselwirkungen zwischen ionischen Gruppen oder durch Komplexierung polymerer Funktionen mit Metallionen erfolgen. Alle drei Möglichkeiten der Vernetzung können nebeneinander vorliegen. Bevorzugt ist die Vernetzung unter Bildung chemischer Bindungen. Eine oder auch mehrere Komponenten, z.B. ein Reaktivfarbstoff und ein Metallsalz (Kupfersulfat) können zur Vernetzung eingesetzt werden.

Hydrophile polyfunktionelle (nichtionische und farblose) Verbindungen, sind z.B. Diepoxide, Aziridine, Anhydride und vorzugsweise cyclische Kohlensäureimidhalogenide (Cyanurchlorid, Tetrachlorpyrimidin), Dihalogenide von Dicarbonsäuren oder Dialdehyde. Die Säurehalogenide werden aus aprotischen Lösungsmitteln appliziert, während die übrigen polyfunktionellen Verbindungen aus wässrigem Medium unter Einhaltung bestimmter pH-Wert- und Temperaturbereiche appliziert werden können.

Die reaktiven Farbstoffe können verschiedenen Klassen angehören und sind z.B. Anthrachinon-, Formazan- oder Azofarbstoffe. Azofarbstoffe sind bevorzugt. Sie können gegebenenfalls auch als Metallkomplexe vorliegen.

Als Reaktivgruppen (z.B. in den Farbstoffen (c)) seien die folgenden genannt: Carbonsäurehalogenidgruppen, Sulfonsäurehalogenidgruppen, Reste von α,β-ungesättigten Carbonsäuren oder Amiden, z.B. der Acryl-, Methacryl-, α-Chloracryl- oder α-Bromacrylsäure, Acrylamidreste, Reste vorzugsweise niedriger Halogenalkylcarbonsäuren, z. B. der Chloressigsäure, α,β-Dichlorpropionsäure oder α,β-Dibrompropionsäure; Reste von Fluorcyclobutancarbonsäuren, z.B. der Tri- oder Tetrafluorcyclobutancarbonsäure; Reste mit Vinylacylgruppen, z.B. Vinylsulfongruppen oder Carboxyvinylgruppen; Reste, die Äthylsulfonyl($-SO_2CH_2CH_2OSO_2OH$, $-SO_2CH_2CH_2Cl$) oder Äthylaminosulfonylgruppen ($-SO_2NHCH_2CH_2OSO_2OH$) enthalten und halogenierte heterocyclische Reste, wie z.B. Reste von Dihalogenchinoxalinen, Dihalogenpyridazonen, Dihalogenphthalazinen, Halogenbenzthiazolen oder vorzugsweise halogenierte Pyrimidenen oder 1,3,5-Triazinen, wie z.B. von Monohalogentriazinen, Dihalogentriazinen, 2,4-Dihalogenpyrimidinen oder 2,5,6-Trihalogenpyrimidinen. Geeignete Halogenatome in den vorgenannten Resten sind Fluor-, Brom- und insbesondere Chloratome.

Beispielhaft seien die folgenden reaktiven Gruppen, die sich in der Komponente (c) befinden können, aufgezählt: Monochlortriazinyl, Dichlortriazinyl, 2,4-Dichlorpyrimidyl, 2,3-Dichlorchinoaxalin-6-carbonyl, 4,5-Dichlorpyridazonpropionyl, 1,4-Dichlorphthalazin-6-carbonyl, Chlorbenzthiazol, das mit einem Farbstoffmolekül über $-CONH-$, $-SO_2NH-$, $-NH-Ar-N=N-$ (Ar = Phenylen oder Naphthylen), verbunden ist, 5-Chlor-4-methyl-2-methylsulfonyl-pyrimidyl, Vinylsulfonyl, β-Sulfatoäthylsulfonyl, 4-Sulfatoäthylaminosulfonyl, β-Chloräthylsulfonyl oder β-Sulfatopropionamido.

Besonders bevorzugt als Komponente (c) sind reaktive Azofarbstoffe, die Sulfonsäuregruppen ($-SO_3H$) oder Carboxylgruppen ($-COOH$) enthalten, wobei diese auch in Salzform, z.B. in Form eines Alkalimetallsalzes (Natriumsalz) vorliegen können, und die als Reaktivgruppierungen Monochlortriazin-, Dichlortriazin-, 2,4-Dichlorpyrimidin-, Vinylsulfonyl-, β-Sulfatoäthylsulfonyl-, β-Chloräthylsulfonyl- oder β-Sulfatoäthylaminosulfonylreste enthalten.

Besonders wertvoll und vielseitig sind die Membranen, in denen die Komponente (b) mit einem sulfonsäuregruppenhaltigen Azofarbstoff modifiziert ist. Der Azofarbstoff kann auch komplexgebundenes Metall, z.B. Kupfer, enthalten.

Die Umsetzung einer Polystyrolmembran (mit z.B. Hydroxyl- oder Aminogruppen als Substituenten) gemäss (a) mit einer polyfunktionellen Verbindung kann z.B., wenn Cyanurchlorid verwendet wird, so durchgeführt werden, dass man eine wässrige Lösung (wässrig-organische Lösung-Wasser/Aceton) (Suspension) von Cyanurchlorid auf die Membran einwirken lässt. Die Menge Cyanurchlorid kann etwa 0,5 bis 5 Teile pro Teil Membran betragen. Die Reaktionstemperatur wird in der Regel unter 4°C, z.B. bei 0°C, gehalten, um die Hydrolyse des Cyanurchlorids zu vermeiden. Die Reaktionszeit beträgt etwa 5 Minuten bis 5 Stunden und der pH-Wertbereich umfasst etwa 8 bis 11.

Enthält die Polystyrolmembran Nitrilgruppen, so werden diese zunächst durch Umsetzung mit Hydroxylamin in Amidoximgruppen umgewandelt. Die Reaktion wird z.B. unter Einhaltung der folgenden Parameter durchgeführt: Behandlung der Membran während 2 bis 60 Minuten bei Temperaturen von etwa 55 bis 75°C und einer wässrigen Hydroxylaminlösung (2 bis 15%), deren pH-Wert 2 bis 11, vorzugsweise 6 bis 7 (eingestellt z.B. mit Natriumcarbonat) beträgt.

Die so behandelte Membran wird dann aus der Reaktionslösung entfernt und in wässriger Lösung (Suspension) mit der polyfunktionellen Verbindung (z.B. Cyanurchlorid), wie oben beschrieben, weiter modifiziert. Eine andere Umwandlung der Nitrilgruppen besteht darin, dass man sie zu Aminogruppen reduziert, die dann wie oben angegeben weiter modifiziert werden können. Die Umsetzung mit den Komponenten (b) und (c) sowie auch die Modifizierung von Polystyrolen, die reaktive Halogenalkyl- oder Aldehydgruppen enthalten, wird nachfolgend beschrieben.

Die weitere Umsetzung der gemäss (a) modifizierten Membran mit einem hydrophilen Oligomer oder Polymer hängt wesentlich von den beteiligten reaktiven Gruppen ab. Enthält die Polystyrolbasismembran z.B. Halogenmethyl(Chlormethyl)gruppen, so ist der Reaktionsschritt (a) nicht nötig, da man die chemische Bindung mit dem Oligomer oder Polymer (mit z.B. Hydroxyl- oder Aminogruppen) durch nukleophilen Austausch des Halogenatoms knüpfen kann. Neben der Herstellung dieser chemischen Bindung erfolgt gleichzeitig auch eine Vernetzung. Die Reaktion kann in verschiedenen Lösungsmitteln oder Lösungsmittelgemischen durchgeführt werden und wird durch verschiedene Katalysatoren beschleunigt.

So kann man z.B. eine Membran aus chlormethyliertem Polystyrol in NMP mit einer wässrigen Lösung von Polyäthylenimin (MW-30000) in Gegenwart von 1% Kaliumjodid bei 50°C während 5 Minuten umsetzen und erhält so eine vernetzte Membran mit einer Polyäthyleniminschicht, an der weitere chemische Reaktionen (Modifikationen) vorgenommen werden können.

Polystyrolmembranen mit Aldehydfunktionen können analog modifiziert werden.

Polystyrolmembranen mit z.B. Hydroxyl-, Amino- oder Amidoximfunktionen (als Substituenten an Alkyl/Arylseitenketten oder in der Hauptkette aus Polymer) werden in der Regel erst mit der polyfunktionellen Komponente (a) und dann erst mit dem hydrophilen Oligomer oder Polymer (b) umgesetzt.

Die polyfunktionelle Komponente (a) reagiert mit den reaktiven Gruppen der Ausgangsmembran (des Ausgangspolymers), vernetzt diese teilweise und reagiert auch mit den z.B. Amino- oder Hydroxylgruppen enthaltenten hydrophilen Oligomer oder Polymer.

Für die Reaktion der zuvor genannten Oligomeren oder Polymeren (b) mit der Membran ist Wasser das bevorzugte Lösungsmittel, obwohl andere Lösungsmittel, wie z.B. niedere Alkohole oder Ketone allein oder in Kombination mit Wasser verwendet werden können. Die Polymerkonzentration (in den Lösungen) kann zwischen 0,1 und 100% betragen, vorzugsweise beträgt sie jedoch 1 bis 30% und insbesondere 5 bis 15%.

Die einzusetzende Polymerkonzentration, die notwendig ist, um ein Optimum an Durchfluss- und Rückhaltevermögen der Membran zu erreichen, ist abhängig von den reaktiven Gruppen, der Temperatur, der Reaktionszeit sowie dem pH-Wert. Diese Faktoren sowie auch das nach der Reaktion erfolgende Auswaschen kontrollieren das Ausmass der Bindung des Polymers an die Membran sowie auch die Dicke der Polymerschicht. Die Temperatur der Polymerlösung während der Reaktion mit der Membran liegt in der Regel zwischen 0 und 90° C. Die optimale Temperatur ist eine Funktion der Reaktionskinetik der Reaktionsteilnehmer. So erfordert z.B. die Reaktion eines chlormethylierten Polystyrols mit PEI bei einer Temperatur von 30° C 5 Minuten, während andererseits die Reaktion zwischen Chlortriazinylgruppen und PEI während 30 Minuten bei 25° C ausgeführt werden kann.

Die Reaktionszeit kann zwischen einer Minute und 48 Stunden variieren und ist abhängig von der Temperatur, dem pH-Wert der Lösung sowie der Konzentration der Reaktionspartner und dem Molekulargewicht von (b). Um z.B. eine Membran mit gutem Durchfluss- und gutem Rückhaltevermögen zu erreichen, sollte man eine chlormethylierte Polystyrolmembran (2,0 mäq/g) bei 25° C und einem pH-Wert von 8,5 während 2 bis 12 Stunden in einer 10%igen Lösung PEI (MW 30 000) behandeln. Längere Reaktionszeiten können die Eigenschaften der Membranen gegebenenfalls nur verschlechtern.

Andererseits benötigt man für die gleiche Reaktion nur etws 5 bis 30 Minuten bei 20° C, wenn man eine Membran aus einem Aminogruppen enthaltenden Polystyrol, die zuvor mit Cyanurchlorid umgesetzt worden ist, einsetzt. Man erhält auch in diesem Fall eine Membran mit guten Rückhalteeigenschaften.

Der pH-Wert der Polymerlösung dient dazu, die Löslichkeit des Polymers, die Reaktionsgeschwindigeit zwischen Polymer und Substrat und die Menge Polymer, die an der Oberfläche absorbiert wird, zu kontrollieren. Es wurde gefunden, dass bei pH-Werten über 7, insbesondere bei pH-Werten von 7 bis 10, die Reaktionsgeschwindigkeit ihre optimalen Werte erreicht, obwohl auch bei höheren oder tieferen pH-Werten gearbeitet werden kann. Wenn pH-Werte im sauren Bereich angewendet werden, um die Löslichkeit der Oligomeren oder Polymeren zu erhöhen, benötigt man zunächst eine gewisse Zeit für die Adsorption des Polymers an die Membran und muss dann den pH-Wert über 7 erhöhen, um die chemische Bindung zu erhalten. pH-Werte über 12 sind nicht geeignet, da sie die Hydrolyse der funktionellen Gruppen an der Membran beschleunigen können.

Nach der Reaktion der Oligomeren oder Polymeren mit der Membran wird diese in Wasser gewaschen, um überschüssiges Oligomer und Polymer zu entfernen. Die Zeit zum Waschen der Membran kann zwischen einer Minute und 48 Stunden variieren, bevorzugt sind jedoch 30 Minuten bis 4 Stunden. Übermässiges Waschen oder Spülen der Membran führt zu einem Verlust an Rückhaltevermögen, dieses ist jedoch immer noch höher als bei einer nichtmodifizierten Membran. Ein zu kurzes Waschen der Membran führt in der Regel zu relativ dicken Polymerschichten auf der Membran und damit zu Membranen mit relativ geringem Durchfluss. Der pH-Wert und die Temperatur der Waschlösung liegen etwa zwischen 1 und 10 bzw. 0 bis 70° C. Bei höheren Temperaturen und niederen pH-Werten (1 bis 3) kann man auch mit kürzeren Zeiten für das Waschen und Spülen der Membran auskommen. Die Waschlösungen können zwecks Verkürzung der Waschzeiten Zusätze wie z.B. nichtionische oder anionische Tenside und/oder auch Salze (Natriumcarbonat, Natriumsulfat) enthalten.

Von den zuvor aufgezählten Komponenten (a) und (b) wird nicht erwartet, dass jede Komponente (b) gleich gut mit jeder Komponente (a) reagieren wird (kann). Komponenten (b), die z.B. Alkylamingruppen enthalten, sind in der Regel reaktiver als solche Komponenten, die aromatische Aminogruppen oder Hydroxygruppen enthalten.

Ebenfalls werden oligomere oder polymere Isocyanate oder Isothiocyanate (b) in der Regel nicht mit einer Komponente (a) mit identischen Reaktivgruppierungen reagieren. In diesem Fall wird man aus den Komponenten (a) natürlich solche aussuchen, die mit der Komponente (b) reagieren, also z.B. Komponenten mit Methylol-, Amino- oder Hydroxylgruppen, die gut mit den Isocyanaten (b) reagieren können.

Die Umsetzung mit der Komponente (c) dient wie angegeben zur Vernetzung der Membran und gegebenenfalls der Einführung von positiven oder negativen Ladungen (ionischen Gruppierungen) in die Membranoberfläche und/oder die Poren und erfolgt ein- oder zweistufig.

Einstufig bedeutet, dass die die Ladung tragende Verbindung und sogenannte Fixiermittel (z.B. Alkali) in einem Bad angewendet werden.

Im zweistufigen Verfahren hat man zunächst den Adsorptionsschritt der die Ladung tragenden Verbindung und dann in einer separaten Reaktionslösung den Fixierschritt (chemische Reaktion zwischen der Komponente (c) und der gemäss (a) und (b) modifizierten Membran). Das zweistufige Verfahren ist bevorzugt, da einerseits die Konzentration der Komponente (c) in der Adsorptionslösung niedriger gehalten werden und eine solche Lösung gegebenenfalls mehrfach verwendet werden kann und andererseits die Gesamtreaktionszeit kürzer ist als im einstufigen Verfahren.

Im zweistufigen Verfahren kann die Konzentration eines Reaktivfarbstoffes (Komponente (c)) in wässriger Lösung etwa 0,5 bis 3% betragen; die Adsorption wird z.B. bei Temperaturen von 20 bis 35° C während 2 bis 60 Minuten durchgeführt; der pH-Wert kann 4 bis 8 betragen. Die Fixierung kann dann in einer wässrigen, auf einen pH-Wert von 9 bis 12 eingestellten Lösung durchgeführt werden, wobei die Reaktionszeit etwa 30

Minuten betragen kann. Die Einstellung des pH-Wertes erfolgt mit beliebigen anorganischen (Natriumcarbonat) oder organischen Basen.

Ferner ist es auch möglich, die geladenen Gruppen durch Umsetzung von Reagenzien, wie Alkyl- oder Benzylhalogeniden, mit einer Aminofunktion der Polymerkette in die Membran einzuführen. Auf diese Weise kann z.B. der Polyäthyleniminrest mit Methyljodid oder Dimethylsulfat modifiziert werden. Andererseits kann auch direkt mit Chlorsulfonsäure modifiziert werden.

Die Membranen können, je nach Verwendungszweck verschiedene Formen aufweisen, z.B. plattenförmig, blattförmig, röhrenförmig, in Form einer Tasche, eines Sacks, eines Konus oder als Hohlfasern vorliegen. Bei starker Druckbelastung können die Membranen natürlich durch Non-woven-Träger, Träger aus textilen Geweben oder Papier, Drahtsiebe oder Lochplatten (Module) geschützt (verstärkt) werden. Innerhalb des weiter oben angegebenen Bereiches kann die Porengrösse durch verschiedene Temperaturen variiert und ebenfalls dem jeweiligen Verwendungszweck angepasst werden. So kann z.B. durch Tempern der Membranen vor oder nach ihrer chemischen Modifikation (50 bis 140° C) die Porengrösse und damit der Durchfluss und das Rückhaltevermögen der Membranen verändern.

Gegenüber bekannten Membranen zeigen die erfindungsgemässen bzw. erfindungsgemäss hergestellten Membranen folgende Vorteile:

Verbessertes Rückhaltevermögen von geladenen, insbesondere mehrfach geladenen ionogenen Substanzen einer wässrigen Lösung; besonders eine

Vergrösserung des Unterschiedes im Rückhaltevermögen von mehrfach geladenen und monovalenten Ionen in wässrigen Lösungen;

Verbesserung des Wirkungsgrades der Trennung (Konzentrierung) von geladenen, insbesondere mehrfach geladenen Ionen von Lösungsmittel (Wasser); verbesserter Flux für Wasser;

Verbesserung des Wirkungsgrades bei der Trennung von niedermolekularen von hochmolekularen Stoffen, wobei sowohl die nieder- als auch die hochmolekularen Stoffe einwertig sind und die gleiche Ladung (positiv oder negativ) aufweisen;

Einsatzmöglichkeit bei pH-Werten bis etwa 12, vorzugsweise 2 bis 12, und Temperaturen bis zu etwa 80° C, vorzugsweise im Temperaturbereich zwischen Raumtemperatur (15-20° C) und 70° C.

Verbesserung der Stabilität gegenüber Lösungsmittel, wobei die Membranen in den üblichen Lösungsmitteln, z.B. N,N-Dimethylformamid, nicht mehr löslich sind;

Verbesserter Widerstand gegen hohe Drucke (gute Stabilität). Druckbereich etwa zwischen 2 und 100, vorzugsweise 2 und 50 und insbesondere 2 bis 30 bar.

Insbesondere für die folgenden Anwendungen sind die erfindungsgemässen Membranen vorteilhaft, wobei es sich im Prinzip stets um Trennungen einwertiger Ionen niedrigen Ionengewichts von mehrwertigen Ionen mit niedrigem oder höherem Ionengewicht und einwertigen Ionen mit höherem Ionengewicht, um Trennungen ionogener von nichtionogenen Substanzen oder von ionogenen Verbindungen unterschiedlichen Molekulargewichts oder entgegengesetzter Ladung handelt. Die Trennung erfolgt nach üblichen Methoden, z.B. indem man die zu trennende Flüssigkeit/Lösung auf einer Seite der Membran vorlegt und unter Anwendung eines hydraulischen Drucks, der grösser ist als der osmotische Druck der Lösungen, die Lösung filtriert.

1. Die Trennung von organischen und auch metallorganischen ionogenen Substanzen von Nebenprodukten aus einer Reaktionsmischung und anderen Substanzen, welche darin enthalten sind, z.B. von Salzen, wie Natriumchlorid, Natriumsulfat oder Natriumacetat oder Säuren.

2. Die Trennung von Schwermetallkomplexen von solchen Salzen, welche keine Komplexe bilden (Behandlung von Abwässern).

3. Die Reinigung von Abwässern, welche bei der Produktion und Anwendung von Farbstoffen und optischen Aufhellern anfallen.

4. Die Trennung von Proteinen oder Hormonen, welche ähnliche Molekulargewichte haben, jedoch entgegengesetzt geladen sind.

5. Die Trennung von ionischen Tensiden (Detergenzien, Netzmittel oder Dispergatoren) von anderen Chemikalien, welche in der Reaktionsmischung nach der Herstellung der Tenside noch vorhanden sind (Nebenprodukte, überschüssige Ausgangsprodukte).

6. Die Entfernung von ionogenen Tensiden aus Abwässern.

7. Die Trennung von ionogenen Molekülen von Wasser, d.h. die Konzentrierung von wässerigen Lösungen, welche Metallkomplexe, Tenside, Farbstoffe oder Proteine enthalten, wobei bessere Ergebnisse bezüglich des Wirkungsgrades (Durchfluss pro Zeiteinheit) und des Trenneffektes im Vergleich zu bekannten Membranen erzielt werden.

8. Die Trennung von entgegengesetzt geladenen Verbindungen oder von geladenen und ungeladenen Verbindungen.

Der Trenneffekt (das Rückhaltevermögen) der Membranen kann wie folgt gemessen werden: eine kreisförmige Membran von 13 $cm^2$ Fläche wird, auf einer Sinterscheibe aus rostfreiem Stahl ruhend, in eine zylindrische Zelle aus rostfreiem Stahl eingesetzt. 150 ml der (zu prüfenden) Lösung, die die zu prüfende Substanz in der Konzentration $c_1$ (g Substanz in g Lösung) enthält, wird auf die Membran im Stahlzylinder gegeben und mit Stickstoff einem Druck von 14 bar ausgesetzt. Die Lösung wird magnetisch gerührt. Die auf der Austrittsseite der Membran anfallende Flüssigkeit wird auf ihren Gehalt (Konzentration) $c_2$ an zu prüfender Substanz untersucht, indem ab Start des Experimentes 3 Muster von je 5 ml gezogen werden. Im allgemeinen

ist die Durchflussmenge durch die Membran und die Zusammensetzung der 3 Muster konstant. Hieraus lässt sich das Rückhaltevermögen als

$$R = \frac{c_1 - c_2}{c_1} \cdot 100\ (\%)$$

berechnet. Als Durchflussmenge pro Flächen- und Zeiteinheit ergibt sich

$D = V \cdot F^{-1} \cdot t^{-1}$

V: Volumen

F: Membranfläche

t: Zeit

D ist zweckmässig ausgedrückt in $m^3 \cdot m^{-2} \cdot d^{-1}$, d.h. Anzahl Kubikmeter je Quadratmeter Membranfläche und Tag oder in $lm^{-2}h^{-1}$, d.h. Liter pro Quadratmeter Membranfläche und Stunde.

Zusätzlich zu den Messungen an Flachmembranen werden auch Messungen mit röhrenförmigen Membranen von 60 cm Länge und einem äusseren Durchmesser von 1,4 cm durchgeführt. Diese röhrenförmigen Membranen werden dazu in eine perforierte Röhre aus rostfreiem Stahl gebracht.

Das Ganze wird in eine Röhre aus Polycarbonat gebracht. Der Ausfluss der Membrane befindet sich zwischen dieser äusseren Polycarbonatröhre und der Stahlröhre. Die Flüssigkeitszugabe erfolgt als turbulent fliessender Strom der Lösung unter Druck (30 bar). Die Fliessgeschwindigkeit wird konstant bei etwa 10-15 Litern pro Minute gehalten. Die Berechnung des Rückhaltevermögens und des Durchflusses erfolgt auf die gleiche Weise wie für die Flachmembranen.

In den folgenden Beispielen werden die Farbstoffe und farblosen Verbindungen der Formeln (101) bis (107) als polyfunktionelle Verbindungen zur Vernetzung der Komponente (b) und zur Einführung ionischer Gruppen verwendet. Die Farbstoffe der Formeln (108) bis (110) werden in Testlösungen verwendet.

Teile und Prozente in den nachfolgenden Beispielen beziehen sich sofern nicht anders angegeben - auf das Gewicht.

(101) 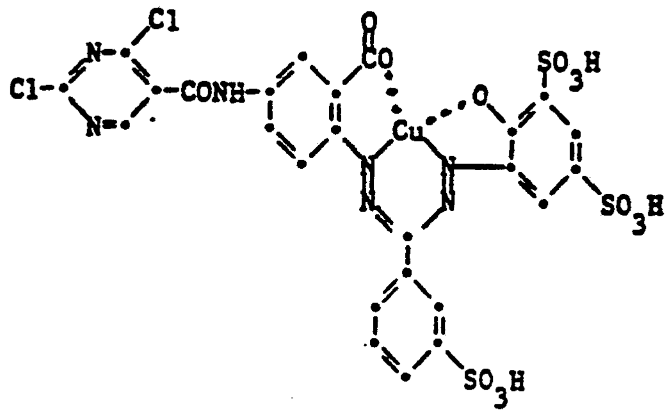

(102a) 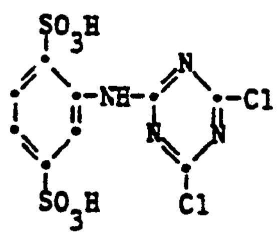

(102b) 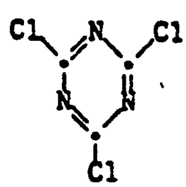

(102c) 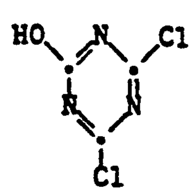

(103) 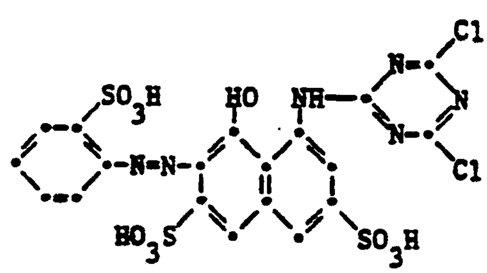

(104) 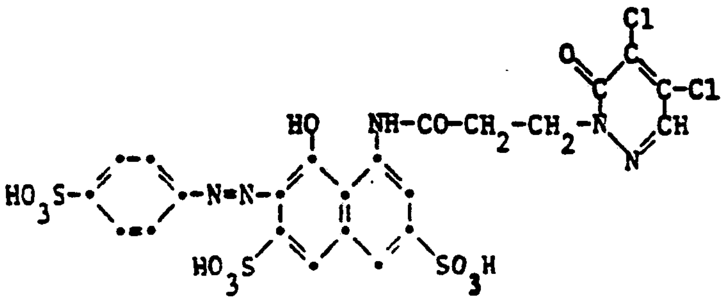

(105) 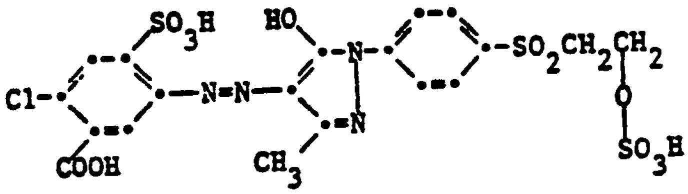

(106) 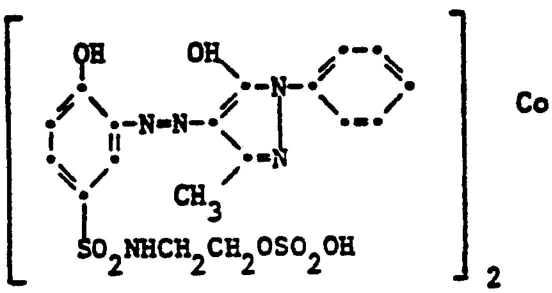

(107) 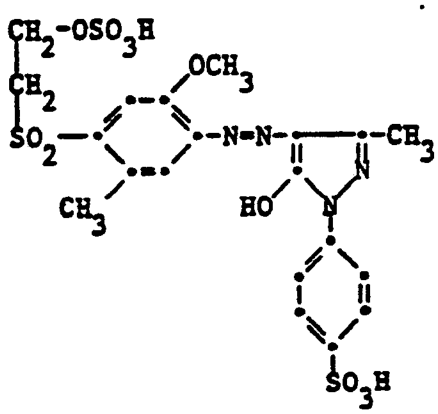

(108) 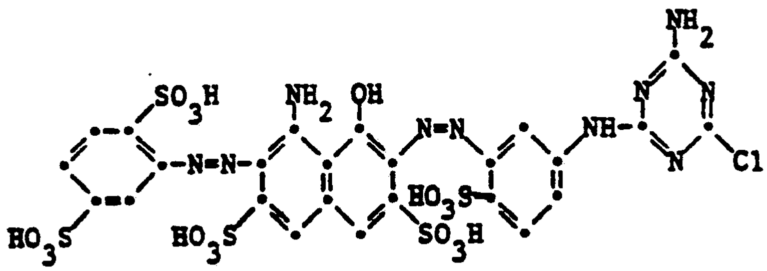

(109) 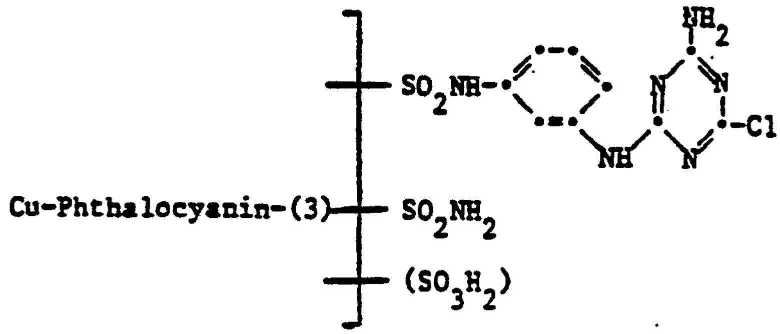

(110) 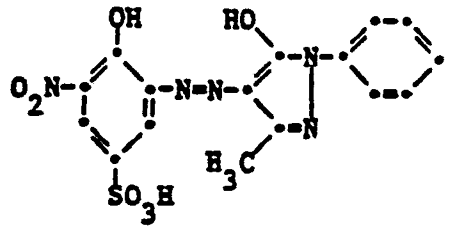

+

etwa 1/3 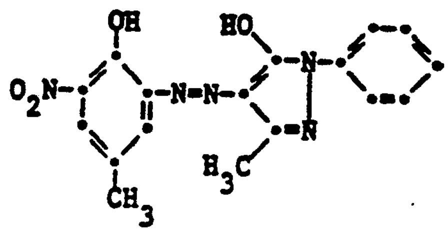

etwa 2/3 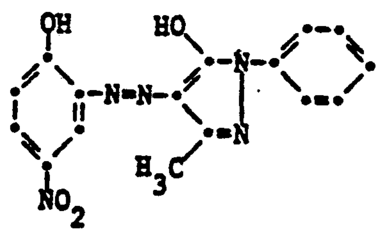

(2:1 Chromkomplex)

**Beispiel 1:**

Ein Terpolymer aus Styrol, Chlormethylstyrol und Acrylnitril mit folgenden Struktureinheiten

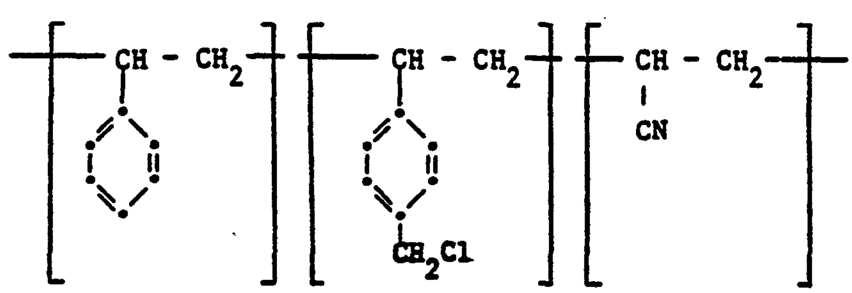

wird in üblicher Weise hergestellt.

Der Chlorgehalt beträgt 1,2 mäq/g und das Gewichtsverhältnis der Styroleinheiten zu den Acrylonitrileinheiten 75:25. Das mittlere Molekulargewicht des Copolymers beträgt 39'000.

Eine 16%-ige Lösung des Polymers in N-Methylpyrrolidon wird filtriert und dann auf einen Polyester-Non-woven Träger in einer Dicke von 0,2 mm (Dicke des feuchten Films) gegossen. Anschliessend wird der noch

feuchte Film sofort in eine wässrige Lösung von 4° C die 0,5% Natriumdodecylsulfonat enthält, eingetaucht. Man erhält eine Membran, die wasserunlöslich ist und fest mit dem Träger verbunden ist. Die Membran wird 24 Stunden in entionisiertem Wasser gewaschen und dann in einem ersten Schritt durch Eintauchen in eine 10%-ige wässrige Polyäthyleniminlösung und Behandlung während einer Stunde bei 50° C modifiziert.

Anschliessend wird die Membran mit Leitungswasser 2 Stunden lang gewaschen und dann 15 Minuten in einem wässrigen Bad behandelt, das 1% des Farbstoffs der Formel (101) und 10% Natriumchlorid enthält. Dann lässt man die Membran kurz abtropfen (10 Sekunden) und behandelt sie bei Raumtemperatur 30 Minuten lang in einer wässrigen 2%-igen Natriumcarbonatlösung.

Die so erhaltene Membran ist vernetzt und unlöslich in N-Methylpyrrolidon und Dimethylformamid.

Die Werte für Durchfluss und Rückhaltevermögen vor und nach der beschriebenen Modifikation sind in Tabelle 1 angegeben.

**Tabelle 1**

| gelöste Verbindung | Konzentration % | Vor der Modifikation | | Nach der Modifikation | |
|---|---|---|---|---|---|
| | | Rückhaltevermögen % | Durchfluss $l/m^2 \cdot h$ | Rückhaltevermögen % | Durchfluss $l/m^2 \cdot h$ |
| Farbstoff der Formel (108) | 0,15 | 85 | 62 | 98 | 34 |
| Kongorot | 1,0 | 90 | 51 | 99,5 | 42 |
| P-Toluolsulfonsäure | 1,0 | 27 | 42 | 34 | 50 |
| NaCl | 1,0 | 15 | 36 | 25 | 54 |

**Testbedingungen: pH-Wert: 7,0; 25° C; Druck: 20 bar**

**Beispiel 2:**

Zu 5 g einer Copolymerlösung (Styrol/Acrylnitril - 75/25) in 250 ml Methylenchlorid werden 20 ml Chlormethyläther und 0,5 ml Zinn(4)chlorid gegeben. Die Reaktionslösung wird 5 Stunden bei Rückflusstemperatur gehalten, dann auf Raumtemperatur abgekühlt und in 600 ml Methanol eingegossen. Das ausgefällte Polymer wird abfiltriert, in Dimethylformamid aufgenommen und in Wasser ausgefällt. Man erhält ein chlormethyliertes Copolymer mit einem Chlorgehalt von 1,6 mäq/g. Aus diesem Copolymer wird eine Membran gegossen und anschliessend modifiziert wie in Beispiel 1 angegeben. Abgeändert wurde nur die Umsetzung mit Polyäthylenimin, die bei Raumtemperatur während 5 Minuten durchgeführt wurde.

In Tabelle 2 sind die Werte für Durchfluss und Rückhaltevermögen angegeben.

**Beispiel 3:**

2,5 g eines Styrol-Vinylidenchlorid-Copolymers (Molverhältnis 2,12:1) werden in 120 ml Schwefelkohlenstoff gelöst und mit 2,5 ml Chlormethyläther in Gegenwart von 1 g Aluminiumchlorid während 8 Stunden bei Raumtemperatur chlormethyliert.

Das erhaltene Copolymer wird in Methanol ausgefällt, in Dimethylformamid aufgenommen und in Wasser erneut ausgefällt. Der Chlormethylgehalt beträgt 1,3 mäq/g. Aus diesem Copolymer wird eine Membran gegossen und anschliessend modifiziert wie in Beispiel 2 angegeben. In Tabelle 2 sind die Werte für Durchfluss und Rückhaltevermögen angegeben.

**Beispiel 4:**

10 g des Copolymers gemäss Beispiel 2 werden in 200 ml Benzol gelöst und mit 10 g N-Bromsuccinimid und 0,5 g Benzoylperoxyd versetzt. Die Reaktionslösung wird 4 Stunden erhitzt, dann abfiltriert und in Methanol ausgefällt. Der Bromgehalt des Polymers beträgt 0,8 mäq/g.

Gemäss dem Kernresonanzspektrum liegen im Polymer Struktureinheiten der folgenden Formeln vor:

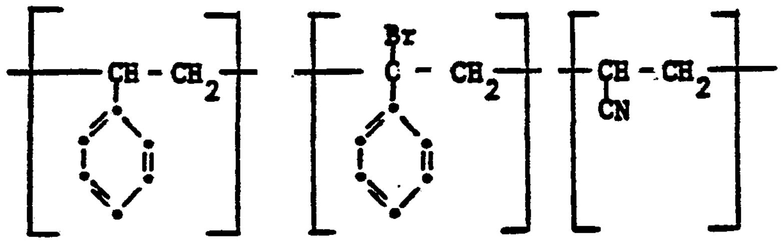

Aus diesem Copolymer wird eine Membran gegossen und anschliessend modifiziert wie in Beispiel 1 angegeben. In Tabelle 2 sind die Werte für Durchfluss und Rückhaltevermögen angegeben.

**Tabelle 2**

| Membran gemäss Beispiel | Rückhaltevermögen % | Durchfluss $l/m^2 \cdot h$ |
|---|---|---|
| 2 | 97,1 | 34 |
| 3 | 99,6 | 82 |
| 4 | 94,5 | 112 |

Testbedingungen: pH-Wert: 7,5; 25°C; Druck: 20 bar; 0,15%-ige Farbstofflösung des Farbstoffs der Formel (108).

## Patentansprüche

1. Semipermeable Membranen aus modifizierten Polystyrolen, dadurch gekennzeichnet, dass die Polystyrole wiederkehrende Struktureinheiten der Formeln

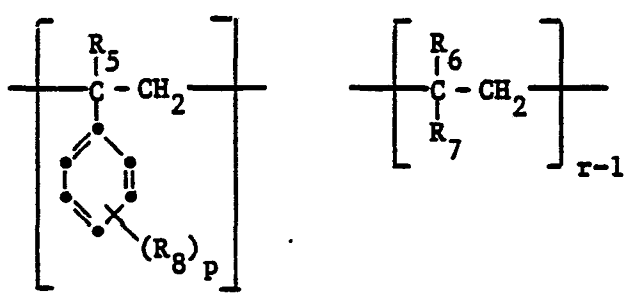

aufweisen, worin p und r unabhängig voneinander 1 oder 2 sind, $R_5$ und $R_6$ unabhängig voneinander Wasserstoff, Alkyl mit 1 bis 4 Kohlenstoffatomen oder Halogen sind, $R_7$ Carboxyl, Carbalkoxy mit 1 bis 8 Kohlenstoffatomen im Alkoxyrest, $-CONH_2$, gegebenenfalls N-mono- oder N,N-disubstituiert, Halogen oder Cyano und $R_8$ Wasserstoff oder
(A) $-R_1NH_2$, $-R_2OH$ oder $-R_2SH$ ist, worin $-R_1-$ eine chemische Bindung,
$-C_mH_{2m}-$, $-(CH_2)_q-NH-(CH_2)_{2-6}-$, $-(CH_2)_q-O-(CH_2)_{2-6}-$,

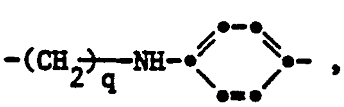 , 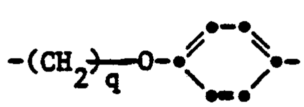 oder

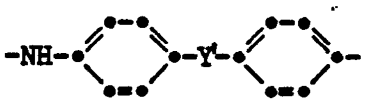 , Y' $-O-$, $-S-$, $-SO_2-$, $-C(CH_3)_2-$,

$-R_2-$ eine chemische Bindung oder $-C_mH_{2m}-$, m eine ganze Zahl von 1 bis 6 und q Null oder 1 ist und die Struktureinheiten durch Umsetzung mit

(a) organischen Verbindungen, die reaktive Mehrfachbindungen oder Epoxid-, Aziridin-, Aldehyd-, Imidat-, Isocyanat-, Isothiocyanat-, Hydroxyl-, Säureanhydrid-, Säurechlorid-, Kohlensäureimidhalogenid- oder N-Methylolgruppen enthalten oder Verbindungen, die als tertiäre Amine oder als Anionen abspaltbare Substituenten, oder mit Verbindungen, die Kombinationen dieser Gruppen (Substituenten) enthalten,

(b) hydrophilen, polyfunktionellen, aliphatischen oder aromatischen Oligomeren oder Polymeren, die Amino-, Hydroxyl- oder Thiolgruppen enthalten, und

(c) nicht-ionischen Verbindungen oder ionischen Verbindungen mit mindestens einer Sulfo-($-SO_3H$)-, Carboxyl-(-COOH)- oder Ammoniumgruppe, wobei die Sulfo- und Carboxylgruppe auch in Salzform vorliegen kann, und mindestens einer, vorzugsweise zwei, mit der Komponente (b) reaktionsfähigen Gruppe(n), chemisch modifiziert sind, oder

(B) $R_8$ $-R_3X$, $-R_4CHO$, -NCO oder -NCS ist, worin $-R_3-$ eine chemische Bindung an einen aliphatischen Rest oder $-C_mH_{2m}-$, $-R_4-$ eine chemische Bindung oder $-C_nH_{2n}-$, X Halogen und n eine ganze Zahl von 1 bis 5 ist und m die angegebene Bedeutung hat und die Struktureinheiten durch Umsetzung mit (b) und (c) chemisch modifiziert sind, oder

(C) $R_8$ $-R_4CN$ ist, worin $R_4$ die angegebene Bedeutung hat und die Struktureinheiten durch Umsetzung mit Hydroxylamin, (a), (b) und (c) chemisch modifiziert sind und

der Substitutionsgrad von $R_5$ in der Bedeutung Halogen oder der von Wasserstoff verschiedenen Substituenten $R_8$ zwischen 0,3 und 3,5 mäq/g liegt.

2. Semipermeable Membranen nach Anspruch 1, dadurch gekennzeichnet, dass die Struktureinheiten den Formeln

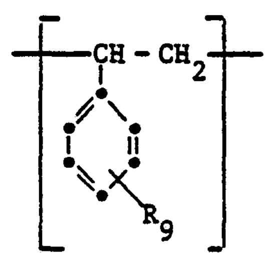 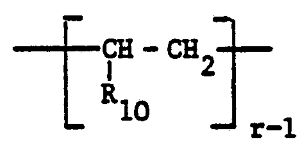

entsprechen, worin $R_{10}$ -COOH, $-CONH_2$ oder -CN, r 1 oder 2 und $R_9$ Wasserstoff oder

$-CH_2NH_2$, $-CH_2OH$ oder $-NH_2$, chemisch modifiziert durch Umsetzung mit (a), (b) und (c),

$-CH_2X$, worin X Halogen ist, chemisch modifiziert durch Umsetzung mit (b) und (c), oder

$-CH_2CN$ oder -CN ist, chemisch modifiziert durch Umsetzung mit Hydroxylamin, (a), (b) und (c), und der Substitutionsgrad der von Wasserstoff verschiedenen Substituenten $R_9$ zwischen 0,3 und 3,5 mäq/g liegt.

3. Semipermeable Membranen nach den Ansprüchen 1 und 2, dadurch gekennzeichnet, dass die Komponente (a) ein cyclisches Kohlensäureimidhalogenid, ein Isocyanat, ein Isothiocyanat oder eine N-Methylolverbindung ist.

4. Semipermeable Membranen nach Anspruch 3, dadurch gekennzeichnet, dass die Komponente (a) ein Halogendiazin oder -triazin mit mindestens zwei reaktiven Substituenten ist.

5. Semipermeable Membranen nach Anspruch 4, dadurch gekennzeichnet, dass die Komponente (a) Cyanurchlorid oder Tetrachlorpyrimidin ist.

6. Semipermeable Membranen nach den Ansprüchen 1 und 2, dadurch gekennzeichnet, dass die Komponente (b) ein Polyäthylenimin, Polyvinylalkohol, Cellulosederivat, Polyvinylamin, Polyvinylanilin, Polydiallylamin, ein aminomodifiziertes Polyepihalogenhydrin, ein Diaminokondensationsprodukt eines Polyanhydrides, ein Umsetzungsprodukt aus Dicyandiamid, Formaldehyd und Ammoniumchlorid oder einem Amin-Hydrochlorid, ein aminoalkyliertes Polysulfon oder ein aminoalkyliertes Polyphenylenoxid ist.

7. Semipermeable Membranen nach einem der Ansprüche 1 und 2, dadurch gekennzeichnet, dass die Komponente (c) eine farbige Verbindung ist.

8. Semipermeable Membranen nach Anspruch 7, dadurch gekennzeichnet, dass die Komponente (c) ein reaktiver Azofarbstoff ist, der Sulfo-, Carboxyl- und/oder Ammoniumgruppen enthält.

9. Semipermeable Membranen nach Anspruch 8, dadurch gekennzeichnet, dass die Komponente (c) ein reaktiver Azofarbstoff ist, der Sulfo- oder Carboxylgruppen und Monochlortriazinyl-, Dichlortriazinyl-, 2,4-Dichlorpyrimidyl-, Vinylsulfonyl-, β-Sulfatoäthylsulfonyl-, β-Chloräthylsulfonyl- oder β-Sulfatoäthylaminosulfonylreste enthält.

10. Semipermeable Membranen nach einem der Ansprüche 1 und 2, dadurch gekennzeichnet, dass die Komponente (c) ein farbloses nichtionisches Kohlensäureimidhalogenid, Dicarbonsäuredihalogenid oder Dialdehyd ist.

11. Semipermeable Membranen nach Anspruch 10, dadurch gekennzeichnet, dass die Komponente (c) eine farblose ionische Verbindung ist, die Halogentriazinyl- oder Halogenpyrimidylreste aufweist.

12. Semipermeable Membranen nach Anspruch 5, dadurch gekennzeichnet, dass die Struktureinheiten den Formeln

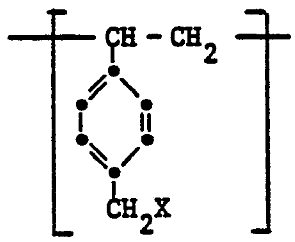
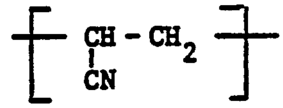

entsprechen, worin X Halogen ist, der $-CH_2X$-Rest durch Umsetzung mit Polyäthylenimin und einem Reaktivfarbstoff, der Sulfonsäuregruppen und einen Dichlortriazinylrest enthält chemisch modifiziert ist und der Substitutionsgrad der Substituenten $-CH_2X$ zwischen 0,3 und 3,5 mäq/g liegt.

13. Semipermeable Membranen nach einem der Ansprüche 1 bis 12, dadurch gekennzeichnet, dass sie als dünner Film auf einem porösen Träger aufgebracht sind.

14. Verfahren zur Herstellung von semipermeablen Membranen nach Anspruch 1, dadurch gekennzeichnet, dass man eine Lösung auf ein (poröses) Trägermaterial giesst, die (I) ein Polymer auf Styrolbasis und (II) ein polares organisches Lösungsmittel oder Lösungsmittelgemisch für das Polystyrol sowie gegebenenfalls Teillösungsmittel, Nicht-Lösungsmittel, Elektrolyte und/oder oberflächenaktive Hilfsmittel enthält, die Membran mit einem Lösungsmittel, das mit dem polaren Lösungsmittel mischbar, aber ein Nichtlösungsmittel für die Membran ist, in Kontakt bringt, um die Membran zu koagulieren, in die so erhaltene Membran die reaktiven Gruppen gemäss Anspruch 1 eingeführt, sofern sie nicht durch Auswahl geeigneter Monomerer bereits im Polymer vorhanden sind, und dann chemisch modifiziert durch

(A) Umsetzung mit

(a) organischen Verbindungen, die reaktive Mehrfachbindungen oder Epoxid-, Aziridin-, Aldehyd-, Imidat-, Isocyanat-, Isothiocyanat-, Hydroxyl-, Säureanhydrid-, Säurechlorid-, Kohlensäureimidhalogenid- oder N-Methylolgruppen enthalten oder Verbindungen, die als tertiäre Amine oder als Anionen abspaltbare Substituenten, oder mit Verbindungen, die Kombinationen dieser Gruppen (Substituenten) enthalten,

(b) hydrophilen, polyfunktionellen, aliphatischen oder aromatischen Oligomeren oder Polymeren, die Amino-, Hydroxyl- oder Thiolgruppen enthalten, und

(c) nicht-ionischen Verbindungen oder ionischen Verbindungen mit mindestens einer Sulfo-($-SO_3H$)-, Carboxyl(-COOH)- oder Ammoniumgruppe, wobei die Sulfo- und Carboxylgruppe auch in Salzform vorliegen kann, und mindestens einer, vorzugsweise zwei, mit der Komponente (b) reaktionsfähigen Gruppe(n),

sofern die reaktiven Gruppen den Formeln $-R_1NH_2$, $-R_2OH$ oder $-R_2SH$ entsprechen, worin $-R_1-$ eine chemische Bindung, $-C_mH_{2m}-$, $-(CH_2)_q-NH-(CH_2)_{2-6}-$, $-(CH_2)_q-O-(CH)_{2-6}-$,

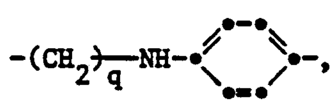, 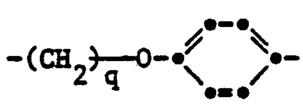 oder 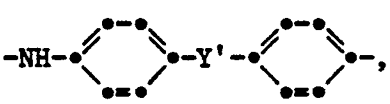,

Y' -O-, -S-, $-SO_2-$ oder $-C(CH_3)_2-$,

$-R_2-$ eine chemische Bindung oder $-C_mH_{2m}-$, m eine ganze Zahl von 1 bis 6 und q Null oder 1 ist, oder

(B) Umsetzung mit (b) und (c), sofern die reaktiven Gruppen den Formeln $-R_3X$, $-R_4CHO$, -NCO oder -NCS entsprechen, worin $R_3$ eine chemische Bindung an einen aliphatischen Rest oder $-C_mH_{2m}-$, $-R_4-$ eine chemische Bindung oder $-C_nH_{2n}-$, X Halogen und n eine ganze Zahl von 1 bis 5 ist und m die angegebene Bedeutung hat, oder

(C) Umsetzung mit Hydroxylamin, (a), (b) und (c), sofern die reaktiven Gruppen der Formel $-R_4CN$ entsprechen, worin $R_4$ die angegebene Bedeutung hat, und der Substitutionsgrad von $R_5$ in der Bedeutung Halogen oder der von Wasserstoff verschiedenen Substituenten $R_8$ zwischen 0,3 und 3,5 mäq/g liegt und anschliessend gegebenenfalls die gebildete Membran von dem (porösen) Träger löst.

15. Verfahren nach Anspruch 14, dadurch gekennzeichnet, dass man die reaktiven Gruppen

- $-R_1NH_2$, $-R_2OH$ oder $-R_2SH$, worin $R_1$ und $R_2$ die in Anspruch 14 angegebenen Bedeutungen haben, ausgenommen die direkte chemische Bindung, durch Haloalkylierung und anschliessende Umsetzung mit Ammoniak oder Aminen, Alkalihydroxiden oder Alkalihydrosulfiden,
- $-R_3X$, $-R_4CHO$, worin $R_3$ und $R_4$ die in Anspruch 14 angegebenen Bedeutungen haben, durch Haloalkylierung und gegebenenfalls weitere Umsetzung mit alkalisch wirkenden Verbindungen,
- $-R_4CN$ durch Haloalkylierung, sofern $R_4$ keine direkte chemische Bindung ist, und weitere Umsetzung mit einer Cyanverbindung

in die Membran einführt und

anschliessend gemäss (A), (B) und (C) modifiziert.

16. Verfahren nach Anspruch 14, dadurch gekennzeichnet, dass die Polymerkonzentration in der Giesslösung 5 bis 80 Gewichtsprozent beträgt.

17. Verfahren nach einem der Ansprüche 14 bis 16, dadurch gekennzeichnet, dass als polares organisches Lösungsmittel Dimethylsulfoxid, N,N-Dimethylformamid, N,N-Dimethylacetamid, N-Methylpyrrolidon, Hexamethylphosphoramid oder deren Gemische verwendet werden.

18. Verfahren nach einem der Ansprüche 14 bis 17, dadurch gekennzeichnet, dass das Koagulationsbad hauptsächlich Wasser enthält.

19. Verfahren nach einem der Ansprüche 14 bis 18, dadurch gekennzeichnet, dass die erhaltene Membran bei Temperaturen von 50 bis 140° C nachbehandelt wird.

20. Verfahren nach einem der Ansprüche 14 bis 19, dadurch gekennzeichnet, dass man Flach- oder Röhrenmembranen herstellt.

21. Verwendung der Membranen nach einem der Ansprüche 1 bis 13 zur Trennung einwertiger lonen niedrigen lonengewichts von vorzugsweise mehrwertigen lonen mit niedrigem oder höherem lonengewicht und einwertigen lonen mit höherem lonengewicht.

22. Verwendung nach Anspruch 21, dadurch gekennzeichnet, dass organische und metallorganische ionogene Substanzen von den Nebenprodukten in einer Reaktionsmischung getrennt werden.

23. Verwendung nach Anspruch 21, dadurch gekennzeichnet, dass Abwässer aus der Farbstoffproduktion durch Abtrennung der Farbstoffe gereinigt werden.

24. Verwendung der Membran nach einem der Ansprüche 1 bis 13 zur Trennung von ionogenen Substanzen von nicht-ionogenen Substanzen.

25. Verwendung der Membranen nach einem der Ansprüche 1 bis 13 zur Trennung entgegengesetzt geladener ionogener Verbindungen mit unterschiedlichem Molekulargewicht.

**Revendications**

1.- Membranes semi-perméables en polystyrènes modifiés, caractérisées en ce que les polystyrènes comprennent des unités structurales récurrentes des formules

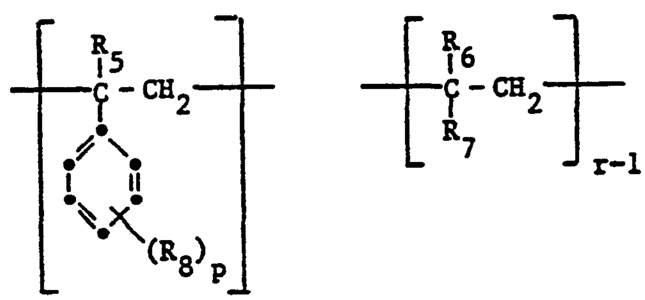

dans lesquelles p et r sont, indépendamment l'un de l'autre, égaux à 1 ou à 2, $R_5$ et $R_6$ représentent, indépendamment l'un de l'autre, des atomes d'hydrogène, des radicaux alkyle possédant de 1 à 4 atomes de carbone ou des atomes d'halogènes, $R_7$ représente un radical carboxyle, carbalcoxy dont le groupe alcoxy contient de 1 à 8 atomes de carbone, $-CONH_2$ éventuellement N-mono- ou N,N-disubstitué, un atome d'halogène ou le radical cyano et $R_8$ représente un atome d'hydrogène ou

(A) un radical $-R_1NH_2$, $-R_2OH$ ou $-R_2SH$ où $-R_1$-représente une liaison chimique, un radical $-C_mH_{2m}-$, $-(CH_2)_q-NH-(CH_2)_{2-6}-$, $-(CH_2)_q-O-(CH_2)_{2-6}-$,

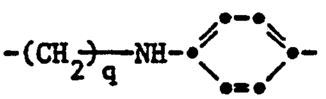 , 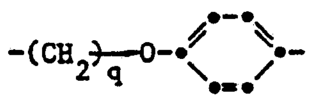 ou

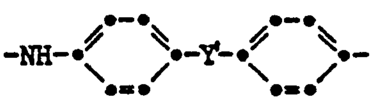 , Y' -O-, -S-, $-SO_2-$, $-C(CH_3)_2-$,

$-R_2-$ représente une liaison chimique ou un radical $-C_mH_{2m}-$, où m représente un nombre entier dont la valeur varie de 1 à 6 et q est égal à zéro ou à 1, et les unités structurales sont chimiquement modifiées par réaction sur

(a) des composés organiques qui contiennent des liaisons multiples réactives ou des radicaux époxyde, aziridine, aldéhyde, imidate, isocyanate, isothiocyanate, hydroxyle, anhydride d'acide, chlorure d'acide, halogénure d'imide d'acide carboxylique ou N-méthylol ou des composés qui contiennent des substituants séparables sous forme d'amines tertiaires ou sous forme d'anions, ou sur des composés qui contiennent des combinaisons de ces radicaux (substituants),

(b) des polymères ou des oligomères hydrophiles, polyfonctionnels, aliphatiques ou aromatiques, qui contiennent des radicaux amino, hydroxyle ou thiol, et

(c) des composés non ioniques ou des composés ioniques avec au moins un radical sulfo($-SO_3H$), carboxyle ($-COOH$) ou ammonium, où le radical sulfo et le radical carboxyle peuvent également se présenter sous la forme de sel, et au moins un, de préférence deux, radical(aux) susceptible(s) de réagir sur la composante (b), ou

(B) un radical $-R_3X$, $-R_4CHO$, -NCO ou -NCS où $-R_3-$ représente une liaison chimique à un radical aliphatique, ou un radical $-C_mH_{2m}-$, $-R_4-$ représente une liaison chimique ou le radical $-C_nH_{2n}-$, X représente un atome d'halogène et n représente un nombre entier dont la valeur varie de 1 à 5 et m possède les significations qui lui ont été précédemment attribuées et les unités structurales sont chimiquement modifiées par réaction sur (b) et (c), ou

(C) un radical $-R_4CN$ où $R_4$ possède les mêmes significations que celles qui lui ont été précédemment attribuées et les unités structurales sont chimiquement modifiées par réaction sur l'hydroxylamine, (a), (b) et (c) et

le degré de substitution de $R_5$ lorsqu'il désigne un halogène ou celui du substituant $R_8$ lorsqu'il est différent de l'hydrogène, varie de 0,3 à 3,5 méq/g.

2.- Membranes semi-perméables suivant la revendication 1, caractérisées en ce que les unités structurales correspondent aux formules:

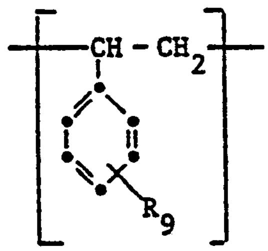

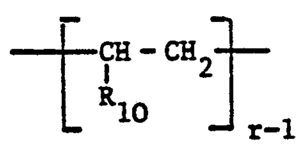

dans lesquelles $R_{10}$ représente un radical -COOH, $-CONH_2$ ou -CN, r est égal à 1 ou à 2 et $R_9$ représente un atome d'hydrogène, ou le radical $-CH_2NH_2$, $-CH_2OH$ ou $-NH_2$ chimiquement modifié par réaction sur (a), (b) et (c), le radical $-CH_2X$ où X représente un atome d'halogène, chimiquement modifié par réaction sur (b) et (c), ou le radical $-CH_2CN$ ou -CN, chimiquement modifié par réaction sur l'hydroxylamine, (a), (b) et (c) et le degré de substitution du substituant $R_9$ lorsqu'il diffère de l'hydrogène varie de 0,3 à 3,5 méq/g.

3.- Membranes semi-perméables suivant les revendications 1 et 2, caractérisées en ce que la composante (a) représente un halogénure d'imide d'acide carboxylique cyclique, un isocyanate, un isothiocyanate ou un composé N-méthylolique.

4.- Membranes semi-perméables suivant la revendication 3, caractérisées en ce que la composante (a) est une halogéno-diazine ou -triazine avec au moins deux substituants réactifs.

5.- Membranes semi-perméables suivant la revendication 4, caractérisées en ce que la composante (a) est du cyanurochlorure ou de la tétrachloropyrimidine.

6.- Membranes semi-perméables suivant les revendications 1 et 2, caractérisées en ce que la composante (b) est une polyéthylène-imine, un alcool polyvinylique, un dérivé de cellulose, une polyvinylamine, une polyvinylaniline, une polydiallylamine, une polyépihalogénohydrine aminomodifiée, un produit de diaminocondensation d'un polyanhydride, un produit de la réaction de dicyandiamide, de formaldéhyde et de chlorure d'ammoniurn, ou un chlorhydrate d'amine, une polysulfone aminoalkylée, ou un polyphénylène-oxyde aminoalkylé.

7.- Membranes semi-perméables suivant une des revendications 1 et 2, caractérisées en ce que la composante (c) est un composé coloré.

8.- Membranes semi-perméables suivant la revendication 7, caractérisées en ce que la composante (c) est un colorant azoïque réactif qui contient des radicaux sulfo, carboxyle et/ou ammonium.

9.- Membranes semi-perméables suivant la revendication 8, caractérisées en ce que la composante (c) est un colorant azoïque réactif qui contient des radicaux sulfo ou carboxyle et des radicaux monochlorotriazinyle, dichlorotriazinyle, 2,4-dichloropyrimidyle, vinylsulfonyle, β-sulfatoéthylsulfonyle, β-chloréthylsulfonyle ou β-sulfatoéthylaminosulfonyle.

10.- Membranes semi-perméables suivant l'une des revendications 1 et 2, caractérisées en ce que la composante (c) est un dialdéhyde, un dihalogénure d'acide dicarboxylique, ou un halogénure d'imide d'acide carboxylique non ionique, incolore.

11.- Membranes semi-perméables suivant la revendication 10, caractérisées en ce que la composante (c) est un composé ionique incolore qui comporte des radicaux halogénotriazinyle ou halogénopyrimidyle.

12.- Membranes semi-perméables suivant la revendication 5, caractérisées en ce que les unités structurales répondent aux formules

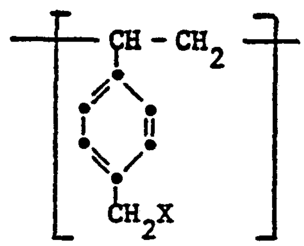

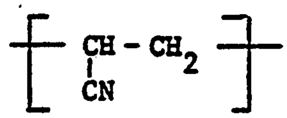

dans lesquelles X représente un atome d'halogène, le radical $-CH_2X-$ est chimiquement modifié par réaction sur une polyéthylèneimine et un colorant réactif qui contient des radicaux acide sulfonique et un radical dichlorotriazinyle et le degré de substitution du substituant $-CH_2X$ varie de 0,3 à 3,5 méq/g.

13.- Membranes semi-perméables suivant l'une des revendications 1 à 12, caractérisées en ce qu'elles sont déposées sur un support poreux sous la forme d'une mince pellicule.

14.- Procédé de fabrication de membranes semiperméables suivant la revendication 1, caractérisé en ce que l'on verse une solution sur un matériau de support (poreux), laquelle solution contient (I) un polymère à base de styrène et (II) un solvant ou un mélange de solvants organiques polaires pour le polystyrène, comme aussi éventuellement des solvants partiels, des non solvants, des électrolytes et/ou des agents tensioactifs ou surfactifs, en ce que l'on met la membrane en contact avec un solvant qui est miscible au solvant polaire, mais qui est cependant un non solvant pour la membrane, pour coaguler la membrane, en ce que l'on introduit les radicaux réactifs suivant la revendication 1 dans la membrane ainsi obtenue, pour autant qu'ils ne soient déjà pas présents dans le polymère par le choix de monomères appropriés et en ce qu'on les modifie ensuite chimiquement par

(A) réaction sur

(a) des composés organiques qui contiennent des liaisons multiples réactives ou des radicaux époxyde, aziridine, aldéhyde, imidate, isocyanate, isothiocyanate, hydroxyle, anhydride d'acide, chlorure d'acide, halogénure d'imide d'acide carboxylique ou N-méthylol ou des composés qui contiennent des substituants séparables sous forme d'amines tertiaires ou sous forme d'anions, ou sur des composés qui contiennent des combinaisons de ces radicaux (substituants),

(b) des polymères ou des oligomères hydrophiles, polyfonctionnels, aliphatiques ou aromatiques, qui contiennent des radicaux amino, hydroxyle, ou thiol, et

(c) des composés non ioniques ou des composés ioniques avec au moins un radical sulfo($-SO_3H$), carboxyle ($-COOH$) ou ammonium, où le radical sulfo et le radical carboxyle peuvent également se présenter sous la forme de sel, et au moins un, de préférence deux, radical(aux) susceptible(s) de réagir sur la composante (b),

pour autant que les radicaux réactifs répondent aux formules $-R_1NH_2$, $-R_2OH$ ou $-R_2SH$, où $-R_1-$ représente une liaison chimique, un radical

$-C_mH_{2m}-$, $-(CH_2)_q-NH-(CH_2)_{2-6}-$, $-(CH_2)_q-O-(CH_2)_{2-6}-$,

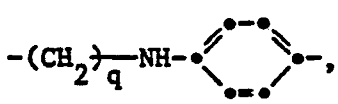, 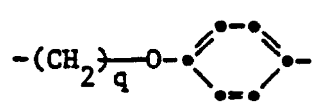 ou 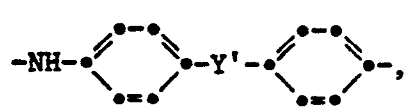,

Y' -O-, -S-, $-SO_2-$ ou $-C(CH_3)_2-$,

$-R_2-$ représente une liaison chimique ou un radical $-C_mH_{2m}-$, m représente un nombre entier dont la valeur varie de 1 à 6 et q est égal à zéro ou à 1, ou

(B) réaction sur (b) et (c) pour autant que les radicaux réactifs répondent aux formules $-R_3X$, $-R_4CHO$, -NCO ou -NCS, où $R_3$ représente une liaison chimique à un radical aliphatique, ou un radical $-C_mH_{2m}-$,$-R_4-$représente une liaison chimique ou un radical $-C_nH_{2n}-$, X représente un atome d'halogène et n représente un nombre entier dont la valeur varie de 1 à 5 et m possède les mêmes significations que celles qui lui ont été precédemment attribuées, ou

(C) réaction sur l'hydroxylamine, (a), (b) et (c), pour autant que les radicaux réactifs répondent à la formule $-R_4CN$ dans laquelle $R_4$ possède les mêmes significations que celles qui lui ont été précédemment attribuées et le degré de substitution de $R_5$ lorsqu'il désigne un atome d'halogène ou celui du substituant $R_8$ lorsqu'il est différent de l'hydrogène, varie de 0,3 à 3,5 méq/g et en ce que l'on enlève ensuite éventuellement la membrane formée du support (poreux).

15.- Procédé suivant la revendication 14, caractérisé en ce que l'on introduit les radicaux réactifs $-R_1NH_2$, $-R_2OH$ ou $-R_2SH$ où $R_1$ et $R_2$ possèdent les significations qui leur ont été attribuées dans la revendication 14, à l'exception de la liaison chimique directe, par haloalkylation et réaction subséquente sur l'ammoniac ou des amines, des hydroxydes de métaux alcalins ou des hydrosulfures de métaux alcalins,

$-R_3X$, $-R_4CHO$ où $R_3$ et $R_4$ possèdent les significations qui leur ont été attribuées dans la revendication 14, par haloalkylation et éventuellement réaction ultérieure sur des composés à activité alcaline,

$-R_4CN$, par haloalkylation, pour autant que $R_4$ ne représente pas de liaison chimique directe et réaction ultérieure sur un composé du type cyano, dans la membrane, et

on les modifie ensuite suivant (A), (B) et (C).

16.- Procédé suivant la revendication 14, caractérisé en ce que la concentration du polymère dans la solution que l'on verse varie de 5 à 80 pourcent en poids.

17.- Procédé suivant l'une des revendications 14 à 16, caractérisé en ce qu'à titre de solvant organique polaire, oon utilise le sulfoxyde de diméthyle, le N,N-diméthylformamide, le N,N-diméthylacétamide, la N-méthylpyrrolidone, l'hexaméthylphosphoramide ou leurs mélanges.

18.- Procédé suivant l'une des revendications 14 à 17, caractérisé en ce que le bain de coagulation contient principalement de l'eau.

19.- Procédé suivant l'une des revendications 14 à 18, caractérisé en ce que l'on poursuit le traitement de la membrane obtenue, à des températures de 50 à 140° C.

20.- Procédé suivant l'une des revendications 14 à 19, caractérisé en ce que l'on fabrique des membranes planes ou tubulaires.

21.- Utilisation des membranes suivant l'une des revendications 1 à 13 pour la séparation d'ions monovalents de faible poids ionique d'ions de préférence polyvalents, de poids ionique faible ou élevé et d'ions monovalents de poids ionique élevé.

22.- Utilisation suivant la revendication 21, caractérisée en ce que l'on sépare des substances organiques et organométalliques ionogènes des produits secondaires dans un mélange de réaction.

23.- Utilisation suivant la revendication 21, caractérisée en ce que l'on épure des eaux résiduaires provenant de la production de colorants, par séparation des colorants.

24.- Utilisation des membranes suivant l'une des revendications 1 à 13 pour la séparation de substances ionogènes de substances non ionogènes.

25.- Utilisation des membranes suivant l'une des revendications 1 à 13 pour la séparation de composés ionogènes contrairement chargés, de poids moléculaires différents.

**Claims**

1. Semipermeable membranes of modified polystyrenes which comprise polystyrenes with repeating structural units of the formulae

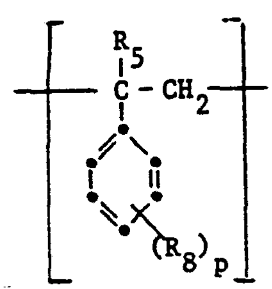
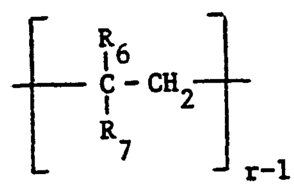

wherein p and r are independently of one another 1 or 2, $R_5$ and $R_6$ are independently of one another hydrogen, alkyl of 1 to 4 carbon atoms or halogen, $R_7$ is carboxyl, carbalkoxy with 1 to 8 carbon atoms in the alkyl moiety, $-CONH_2$, optionally N-mono- or N,N-disubstituted, halogen or cyano, and $R_8$ is hydrogen or

(A) $-R_1NH_2$, $-R_2OH$ or $-R_2SH$, wherein $-R_1-$ is a valence bond, $-C_mH_{2m}-$,

$-(CH_2)_q-NH(CH_2)_{2-6}-$, $-(CH_2)_q-O-(CH_2)_{2-6}-$, 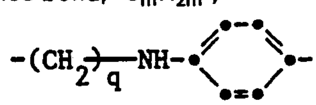 ,

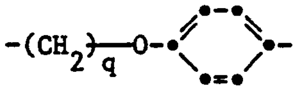 or 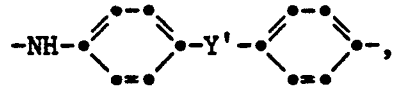, Y' is -O-, -S-, $-SO_2-$ or $C(CH_3)_2$, $-R_2-$ is a valence bond or $-C_mH_{2m}-$, m is an integer of 1 to 6 and q is zero or 1, the structural units being modified through chemical reaction with

(a) organic compounds that contain reactive multiple bonds or epoxide, aziridine, aldehyde, imidate, isocyanate, isothiocyanate, hydroxyl, anhydride, acyl chloride, carbonic acid imide halide or N-methylol groups, or with compounds containing substituents detachable as tertiary amines or as anions, or compounds containing combinations of these groups (substituents),

(b) a hydrophilic polyfunctional, aliphatic or aromatic oligomer or polymer containing amino, hydroxyl or thiol groups, and

(c) a non-ionic compound or a compound containing at least one sulfonic acid group (-$SO_3H$), carboxylic acid group (-COOH) (also in their salt forrn) or ammonium group and at least one, preferably two groups capable of reacting with (b), or

$R_8$ is -$R_3$X, -$R_4$CHO, -NCO or -NCS, wherein -$R_3$- is a valence bond to an aliphatic residue or -$C_mH_{2m}$ -, -$R_4$- is a valence bond or -$C_nH_{2n}$-, X is halogen, n is an integer of 1 to 5 and m has the indicated meaning, the structural units being modified through chemical reaction with components (b) and (c), or

$R_8$ is $R_4$CN, wherein $R_4$ has the indicated meaning the structural units being modified through chemical reaction with hydroxylamine and components (a), (b) and (c), and the degree of substitution of substituent $R_5$, when it is halogen - or of substituent $R_8$ - different from hydrogen - being between 0.3 and 3.5 meq/g.

2. Semipermeable membranes according to claim 1 wherein the repeating structural units are of the formula

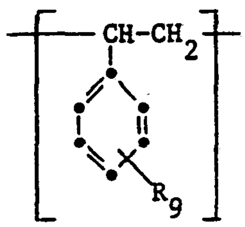

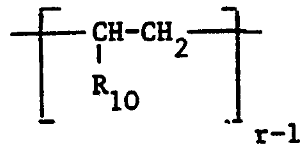

wherein $R_{10}$ is -COOH, -$CONH_2$ or -CN, r is 1 or 2 and $R_9$ is hydrogen or -$CH_2NH_2$, -$CH_2OH$ or -$NH_2$, modified through chemical reaction with components (a), (b) and (c),

-$CH_2$X, wherein X is halogen, modified through chemical reaction with components (b) and (c), or

-$CH_2$CN or -CN, modified through chemical reaction with hydroxylamine, and components (a), (b) and (c), the degree of substitution of substituent $R_9$ - different from hydrogen - being betweeen 0.3 and 3.5 meq/g.

3. Semipermeable membranes according to claims 1 and 2, wherein component (a) is a cyclic carbonic acid imide halide or a compound containing isocyanate, isothiocyanate or N-methylol groups.

4. Semipermeable membranes according to claim 3, wherein component (a) is a halogenodiazine or -triazine containing at least 2 reactive substituents.

5. Semipermeable membranes according to claim 4, wherein component (a) is cyanuric chloride or tetrachloropyrimidine.

6. Semipermeable membranes according to claims 1 and 2, wherein component (b) comprises polyethyleneimines, polyvinyl alcohols, cellulose derivatives, polyvinylamines, polyvinylanilines, polyallylamines, amino modified polyepihalohydrines, diamino condensation products of polyanhydrides, reaction products of dicyandiamide, formaldehyde and ammonium chloride, aminoalkyl polysulfones or aminoalkyl polyphenylene oxides.

7. Semipermeable membranes according to claims 1 and 2, wherein component (c) is a coloured compound.

8. Semipermeable membranes according to claim 7, wherein component (c) is a reactive azo dye containing sulfonic acid groups, carboxyl groups and/or ammonium groups.

9. Semipermeable membranes according to claim 8, wherein component (c) is a reactive azo dyestuff containing sulfonic acid or carboxyl groups and monochlorotriazinyl, dichlorotriazinyl, 2,4-dichloropyrimidinyl, vinyl sulfonyl, β-sulfatoethylsulfonyl, β-chloroethylsulfonyl or β-sulfatoethylaminosulfonyl radicals.

10. Semipermeable membranes according to claims 1 and 2, wherein component (c) is a colourless non-ionic carbonic acid imide halide, a dihalide of dicarboxylic acids or a dialdehyde.

11. Semipermeable membranes according to claim 10, wherein component (c) is a colourless compound containing ionic groups and halotriazinyl or halopyrimidyl radicals.

12. Semipermeable membranes according to claim 5, which comprises structural units of the formulae

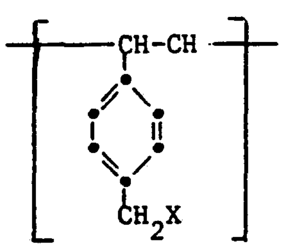

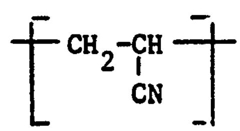

wherein X is halogen and the -$CH_2$X radical is modified through chemical reaction with polyethyleneimine and a reactive azo dyestuff containing sulfonic acid groups and a dichlorotriazinyl radical, the degree of substitution of substituent -$CH_2$X being between 0.3 and 3.5 meq/g.

13. Semipermeable membranes according to anyone of claims 1 to 12 which are coated as thin film onto a porous support.

14. A process for the manufacture of semipermeable membranes according to claim 1 which comprises casting a solution on a (porous) support which solution contains (I) a polymer on the basis of styrene and (II) a

polar organic solvent or solvent mixture for the polymer and optionally partial solvents, non-solvents, electrolytes and/or surfactants, contacting the membrane with a solvent which is miscible with the polar solvent but a non-solvent for the membrane in order to effect coagulation of the membrane, introducing into said membrane the reactive groups according to claim 1, except they are already present in the polymer through selection of suitable monomers, and then modifying the membrane through

(A) chemical reaction with

(a) organic compounds that contain reactive multiple bonds or epoxide, aziridine, aldehyde, imidate, isocyanate, isothiocyanate, hydroxyl, anhydride, acyl chloride, carbonic acid imide halide or N-methylol groups, or with compounds containing substituent detachable as tertiary amines or as anions, or compounds containing combinations of these groups (substituents),

(b) a hydrophilic polyfunctional, aliphatic or aromatic oligomer or polymer containing amino, hydroxyl or thio groups, and

(c) a non-ionic compound or a compound containing at least one sulfonic acid group ($-SO_3H$), carboxylic group (-COOH) (also in their salt form) or ammonium group and at least one preferably two groups capable of reacting with (b),

provided that the reactive groups correspond to the formulae $-R_1NH_2$, $-R_2OH$ or $-R_2SH$, wherein $-R_1-$ is a valence bond,

$-C_mH_{2m}-$, $-(CH_2)_q-NH(CH_2)_{2-6}$, $-(CH_2)_q-O-(CH_2)_{2-6}$, $-(CH_2)_q-NH-$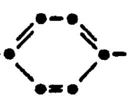

or -NH-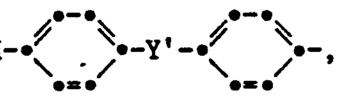, Y' is -O-, -S-, $-SO_2-$ or $-C(CH_3)_2$,

$-R_2-$is a valence bond or $-C_mH_{2m}-$, m is an integer of 1 to 6 and q is zero or 1, or

(B) through chemical reaction with components (b) and (c), provided that the reactive groups correspond to the formulae $-R_3X$, $-R_4CHO$, -NCO or -NCS, wherein $-R_3-$ is a valence bond to an aliphatic residue or $-C_mH_{2m}-$, $-R_4-$ is a valence bond or $-C_nH_{2n}-$, X is halogen, n is an integer or 1 to 5 and m has the indicated meaning, or

(C) through chemical reaction with hydroxylamine and components (a), (b) and (c), provided that the reactive group corresponds to the formula $-R_4CN$, wherein $-R_4-$ has the indicated meaning, the degree of substitution of $R_5$ - when it is halogen - or of substituent $R_8$ - different from hydrogen - being between 0.3 and 3,5 meq/g, and subsequently optionally separating the membrane from the (porous) support.

15. A process according to claim 14 which comprises introducing into the membrane

- the reactive groups $-R_1NH_2$, $-R_2OH$ or $-R_2SH$, wherein $R_1$ and $R_2$ have the meanings indicaced in claim 14, except the valence bond, through haloalkylation and subsequent reaction with ammonia or amines, alkali metal hydroxides or alkali metal hydrosulfides.

- the reactive groups $-R_3X$ and $-R_4CHO$, wherein $R_3$ and $R_4$ have the meanings indicated in claim 14, through haloalkylation and optionally subsequent reaction with alkaline compounds,

- the reactive group $-R_4CN$, wherein $R_4$ has the meaning indicated in claim 14, except the valence bond, through haloalkylation and subsequent reaction with an (inorganic) cyano compound,

and subsequently modifying the reactive groups according to (A), (B) and (C), respectively.

16. A process acording to claim 14, wherein the polymer concentration of the casting solution is in the range of from 5 to 80% by weight.

17. A process according to anyone of claims 14 to 16, wherein the polar organic solvent is dimethyl sulfoxide, N,N-dimethylformamide, N,N-dimethylacetamide, N-methyl-2-pyrollidone, hexamethylphosphoramide or mixture thereof.

18. A process according to anyone of claims 14 to 17, wherein the coagulation liquid is mainly composed of water.

19. A process according to anyone of claims 14 to 18, wherein the obtained membrane is heat treated at temperatures of from 50 to 140° C.

20. A process according to anyone of claims 14 to 19, wherein a flat or a tubular membrane is prepared.

21. Use of the membranes according to anyone of claims 1 to 13, which comprises separating monovalent ions of low ionic weight from preferably polyvalent ions of low or high ionic weight and from monovalent ions of high ionic weight.

22. Use according to claim 21, wherein organic and metal-organic ionic substances are separated from byproducts in a reaction mixture.

23. Use according to claim 21, wherein effluents obtained from dye production are purified by separating off the dyes.

24. Use of the membranes according to anyone of claims 1 to 13, which comprises separating ionic substances from non-ionic substances.

25. Use of the membranes according to anyone of claims 1 to 13, which comprises separating ionic compounds of opposite charge and different molecular weights.